(19) Europäisches Patentamt
European Patent Office
Office européen des brevets

(11) **EP 3 954 656 A1**

(12) **EUROPEAN PATENT APPLICATION**
published in accordance with Art. 153(4) EPC

(43) Date of publication:
**16.02.2022 Bulletin 2022/07**

(21) Application number: **19923816.3**

(22) Date of filing: **20.12.2019**

(51) International Patent Classification (IPC):
**C01G 53/00** (2006.01)   **H01M 4/36** (2006.01)
**H01M 4/505** (2010.01)   **H01M 4/525** (2010.01)

(52) Cooperative Patent Classification (CPC):
**C01G 53/00; H01M 4/36; H01M 4/505;**
**H01M 4/525;** Y02E 60/10

(86) International application number:
**PCT/JP2019/049995**

(87) International publication number:
**WO 2020/208873 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2019   JP 2019076525**

(71) Applicant: **SUMITOMO CHEMICAL COMPANY, LIMITED**
**Chuo-ku**
**Tokyo 104-8260 (JP)**

(72) Inventor: **NAGAO, Daisuke**
**Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **LITHIUM COMPOSITE METAL OXIDE POWDER AND LITHIUM SECONDARY BATTERY POSITIVE ELECTRODE ACTIVE MATERIAL**

(57)    A lithium composite metal oxide powder having a layered structure, the lithium composite metal oxide powder containing at least Li, Ni, an element X and an element M, wherein the element X is at least one element selected from the group consisting of Co, Mn, Fe, Cu, Ti, Mg, Al, W, Mo, Nb, Zn, Sn, Zr, Ga and V, the element M is at least one element selected from the group consisting of B, Si, S and P, a ratio M/(Ni+X) which indicates the amount of the element M relative to the total amount of Ni and the element X exceeds 0 mol% but is not more than 5 mol%, the lithium composite metal oxide powder contains core particles and a coating substance that coats the surface of the core particles, wherein the coating substance contains a compound produced by reaction of the element M and lithium, and a weight reduction percentage 1 when a thermogravimetric measurement is conducted under specific measurement conditions 1 is not more than 0.15 wt%.

**EP 3 954 656 A1**

**Description**

TECHNICAL FIELD

The present invention relates to a lithium composite metal oxide powder and a lithium secondary battery positive electrode active material. Priority is claimed on Japanese Patent Application No. 2019-076525, filed April 12, 2019, the content of which is incorporated herein by reference.

BACKGROUND ART

Lithium composite metal oxides are used as the positive electrode active material for lithium secondary batteries. Lithium secondary batteries are not only already widely used for small power supplies for mobile telephone applications and laptop computer applications and the like, but are also increasingly being used for medium or large power supplies for vehicle applications and electricity storage applications and the like.

All manner of tests have been undertaken to improve the battery characteristics of lithium secondary batteries such as the charge and discharge characteristics. For example, Patent Document 1discloses a positive electrode active material composed of a lithium transition metal oxide that has been surface-coated with a boron lithium oxide.

PRIOR ART LITERATURE

Patent Document

Patent Document 1: JP 2015-536558 A

SUMMARY OF INVENTION

Problems to be Solved by the Invention

As the potential fields of application for lithium secondary batteries continue to develop, further improvements are required in the discharge rate characteristic and cycle characteristic of the positive electrode active material of the lithium secondary battery.

The present invention has been developed in light of the above circumstances, and has the objects of providing a lithium composite metal oxide powder that exhibits a superior discharge rate characteristic and cycle characteristic when used as a lithium secondary battery positive electrode active material, and also providing a lithium secondary battery positive electrode active material.

Means for Solving the Problems

In other words, the present invention includes the following [1] to [8].

[1]A lithium composite metal oxide powder having a layered structure, the lithium composite metal oxide powder containing at least Li, Ni, an element X and an element M, wherein the element X is at least one element selected from the group consisting of Co, Mn, Fe, Cu, Ti, Mg, Al, W, Mo, Nb, Zn, Sn, Zr, Ga and V, the element M is at least one element selected from the group consisting of B, Si, S and P, a ratio M/(Ni+X) which indicates the amount of the element M relative to the total amount of Ni and the element X exceeds 0 mol% but is not more than 5 mol%, the lithium composite metal oxide powder contains core particles and a coating substance that coats the surface of the core particles, the coating substance contains a compound produced by reaction of the element M and lithium, and a weight reduction percentage 1 when a thermogravimetric measurement is conducted under measurement conditions 1 described below is not more than 0.15 wt%.

(Measurement Conditions 1)

Sample: 10 mg of the lithium composite metal oxide powder
Measurement atmosphere: open air (gas flow rate: 220 mL/minute)
Measurement conditions: the temperature is raised from 40°C to 600°C at a rate of temperature increase of 10°C/minute, and the weight of the sample is measured when the temperature reaches 500°C, and then again when the temperature reaches 600°C.

Calculation method: Weight reduction percentage 1 (wt%) = [(weight (g) when the lithium composite metal oxide powder has been heated to 500°C - weight (g) when the lithium composite metal oxide powder has been heated to 600°C) / weight of the lithium composite metal oxide powder used in the thermogravimetric measurement prior to heating] × 100

[2] The lithium composite metal oxide powder according to [1], which satisfies a compositional formula (I) shown below.

$$Li[Li_m(Ni_{(1-n-p)}X_nM_p)_{1-m}]O_2 \dots \qquad (I)$$

(wherein $-0.1 \leq m \leq 0.2$, $0 < n \leq 0.8$, $0 < p \leq 0.05$, and $n+p < 1$)

[3] The lithium composite metal oxide powder according to [2], wherein m in the compositional formula (I) satisfies $0 < m \leq 0.2$.

[4] The lithium composite metal oxide powder according to any one of [1] to [3], wherein a weight reduction percentage 2 when a thermogravimetric measurement is conducted under measurement conditions 2 described below is not more than 0.12 wt%.

(Measurement Conditions 2)

Sample: 10 mg of the lithium composite metal oxide powder
Measurement atmosphere: open air (gas flow rate: 220 mL/minute)
Measurement conditions: the temperature is raised from 40°C to 400°C at a rate of temperature increase of 10°C/minute, and the weight of the sample is measured when the temperature reaches 250°C, and then again when the temperature reaches 400°C.

Calculation method: Weight reduction percentage 2 (wt%) = [(weight (g) when the lithium composite metal oxide powder has been heated to 250°C - weight (g) when the lithium composite metal oxide powder has been heated to 400°C) / weight of the lithium composite metal oxide powder used in the thermogravimetric measurement prior to heating] × 100

[5] The lithium composite metal oxide powder according to any one of [1] to [4], having a BET specific surface area of at least 0.1 $m^2$/g but not more than 3 $m^2$/g.

[6] The lithium composite metal oxide powder according to any one of [1] to [5], having an average primary particle size of at least 0.1 $\mu$m but not more than 10 $\mu$m.

[7] The lithium composite metal oxide powder according to any one of [1] to [6], having a 50% cumulative volume particle size ($D_{50}$) determined by a particle size distribution measurement of at least 1 $\mu$m but not more than 10 $\mu$m.

[8] A lithium secondary battery positive electrode active material comprising the lithium composite metal oxide powder according to any one of [1] to [7].

**[0010]** [0007] Additional aspects of the present invention include the following aspects.

[9] A lithium secondary battery positive electrode containing the lithium secondary battery positive electrode active material according to [8].

[10] A lithium secondary battery having the lithium secondary battery positive electrode according to [9].

Effects of the Invention

**[0012]** [0008] The present invention is able to provide a lithium composite metal oxide powder that exhibits a superior discharge rate characteristic and cycle characteristic when used as a lithium secondary battery positive electrode active material, and also provide a lithium secondary battery positive electrode active material.

BRIEF DESCRIPTION OF THE DRAWINGS

**[0013]** [0009]

FIG. 1A is a schematic structural diagram illustrating one example of a lithium ion secondary battery.
FIG. 1B is a schematic structural diagram illustrating one example of a lithium ion secondary battery.
FIG. 2 is a schematic diagram illustrating a laminate provided in an all-solid lithium ion battery of an embodiment of the present invention.
FIG. 3 is a schematic diagram illustrating the overall structure of an all-solid lithium ion battery of an embodiment of the present invention.

EMBODIMENTS FOR CARRYING OUT THE INVENTION

**[0014]** [0010] In the present invention, the "weight reduction percentage" is a value determined by a thermogravimetric measurement, by measuring the change in weight when the lithium composite metal oxide powder is heated across a certain temperature range, and then calculating the ratio of the change in weight relative to the weight of the lithium composite metal oxide powder used for the measurement prior to heating.
In this description, the weight reduction percentage calculated under measurement conditions 1 is termed the weight reduction percentage 1. Further, the weight reduction percentage calculated under measurement conditions 2 is termed the weight reduction percentage 2.
The "BET specific surface area" is a value measured using the BET (Brunauer, Emmett, Teller) method. In the measurement of the BET specific surface area, nitrogen gas is used as the adsorption gas.
The "discharge rate characteristic" describes the percentage for the discharge capacity at 10 CA when the discharge capacity at 1 CA is deemed to be 100%. The higher this percentage, the higher the output of the battery, which is preferable in terms of battery performance.
The "cycle characteristic" refers to the retention rate for the discharge capacity following repeated discharge cycles relative to the initial discharge capacity. The higher this retention rate, the better any deterioration in battery capacity upon repeated discharge cycles can be suppressed, which is preferable in terms of battery performance.
A "primary particle" means a particle for which no clear grain boundaries can be seen at the particle surface when observed in a visual field at a magnification of at least $5,000\times$ but not more than $20,000\times$ using a scanning electron microscope or the like. The average particle size of the primary particles (average primary particle size) is determined using the following method.
First, the lithium composite metal oxide powder is placed on a conductive sheet affixed to a sample stage, and using a scanning electron microscope (SEM, for example, JSM-5510 manufactured by JEOL Ltd.), an electron beam with an accelerating voltage of 20 kV is irradiated onto the powder to conduct an SEM observation. Fifty primary particles are extracted randomly from the image (SEM photograph) obtained in the SEM observation, and for each primary particle, the distance (directed diameter) between parallel lines that sandwich the projected image of the primary particle between parallel lines drawn in a prescribed direction is measured as the particle size of the primary particle. The arithmetic mean of the obtained particle sizes of the primary particles is deemed the average primary particle size of the lithium composite metal oxide powder.
In this description, a "secondary particle" means a particle formed by aggregating primary particles, and is a particle having a spherical or substantially spherical shape. Secondary particles are typically formed by the aggregation of 10 or more primary particles. In other words, a secondary particle is an aggregate of primary particles.

<Lithium Composite Metal Oxide Powder>

One embodiment of the present invention is a lithium composite metal oxide powder having a crystal structure with a layered structure.
The lithium composite metal oxide powder of this embodiment contains at least Li, Ni, an element X, and an element M.
The element X is at least one element selected from the group consisting of Co, Mn, Fe, Cu, Ti, Mg, Al, W, Mo, Nb, Zn, Sn, Zr, Ga and V.

The element M is at least one element selected from the group consisting of B, Si, S and P.

The ratio (M/(Ni+X)) of the amount of the element M relative to the total amount of Ni and the element X exceeds 0 mol% but is not more than 5 mol%.

- Element X

In this embodiment, from the viewpoint of obtaining a lithium secondary battery having a superior cycle characteristic, the element X is preferably at least one of Co, Mn, Ti, Mg, Al, W and Zr, and in terms of obtaining a lithium secondary battery having high thermal stability, is preferably at least one of Co, Mn, Al, W and Zr. A single element may be used as the element X, or two or more elements may be used. Examples of cases in which two or more elements are used include a combination of Co and Mn, a combination of Co, Mn and Zr, a combination of Co, Mn and Al, and a combination of Co, Mn, W and Zr.

- Element M

The element M can form a compound having lithium ion conductivity when bonded to lithium and oxygen. In the present embodiment, from the viewpoint of obtaining a lithium secondary battery having a superior cycle characteristic, the element M is preferably at least one of B, S and P, and is more preferably B.

In the present embodiment, examples of the lower limit for the ratio (M/(Ni+X)) of the amount of the element M relative to the total amount of Ni and the element X include 0.50 mol%, 0.60 mol% or 0.70 mol%. Examples of the upper limit for the ratio (M/(Ni+X)) of the amount of the element M relative to the total amount of Ni and the element X include 4.0 mol%, 3.0 mol% or 2.5 mol%.

The above upper limit and lower limit may be combined as desired. Examples of such combinations include cases in which the ratio (M/(Ni+X)) of the amount of the element M relative to the total amount of Ni and the element X is at least 0.50 mol% but not more than 4.0 mol%, at least 0.60 mol% but not more than 3.0 mol%, or at least 0.70 mol% but not more than 2.5 mol%.

Provided the ratio (M/(Ni+X)) of the amount of the element M relative to the total amount of Ni and the element X is at least as large as the above lower limit, namely 0.50 mol% or greater, elution of the metal components in the lithium composite metal oxide powder into the electrolyte solution can be prevented. Further, provided the ratio (M/(Ni+X)) of the amount of the element M relative to the total amount of Ni and the element X is not more than the above lower limit, namely not more than 4.0 mol%, the battery resistance can be reduced when the lithium composite metal oxide powder of the present embodiment is used as a positive electrode active material.

- Combination of the Element X and the Element M

In the present embodiment, examples of the combination of the element X and the element M include the following combinations:

-- the element X is Co and Mn, and the element M is B.
-- the element X is Co, Mn and Al, and the element M is B.
-- the element X is Co, Mn and Zr, and the element M is B.
-- the element X is Co, Mn, Al and Zr, and the element M is B.
-- the element X is Co and Mn, and the element M is Si.
-- the element X is Co, Mn and Al, and the element M is Si.
-- the element X is Co, Mn and Zr, and the element M is Si.
-- the element X is Co, Mn, Al and Zr, and the element M is Si.
-- the element X is Co and Mn, and the element M is S.
-- the element X is Co, Mn and Al, and the element M is S.
-- the element X is Co, Mn and Zr, and the element M is S.
-- the element X is Co, Mn, Al and Zr, and the element M is S.
-- the element X is Co and Mn, and the element M is P.
-- the element X is Co, Mn and Al, and the element M is P.
-- the element X is Co, Mn and Zr, and the element M is P.
-- the element X is Co, Mn, Al and Zr, and the element M is P.

<<Weight Reduction Percentage 1>>

The lithium composite metal oxide powder of the present embodiment has a property wherein a weight reduction percentage 1, obtained when a thermogravimetric measurement is conducted under measurement conditions 1 described below, is not more than 0.15 wt%.

(Measurement Conditions 1)

Sample: 10 mg of the lithium composite metal oxide powder
Measurement atmosphere: open air (gas flow rate: 220 mL/minute)
Measurement conditions: the temperature is raised from 40°C to 600°C at a rate of temperature increase of 10°C/minute, and the weight of the sample is measured when the temperature reaches 500°C, and then again when the temperature reaches 600°C.

Calculation method: Weight reduction percentage 1 (wt%) = [(weight (g) when the lithium composite metal oxide powder has been heated to 500°C - weight (g) when the lithium composite metal oxide powder has been heated to 600°C) / weight of the lithium composite metal oxide powder used in the thermogravimetric measurement prior to heating] × 100

A simultaneous thermogravimetry and differential thermal analyzer (for example, STA7300 manufactured by Hitachi High-Tech Science Corporation) may be used as the thermogravimetric measurement device.

Weighing of the sample may be conducted on the weighing beam of the simultaneous thermogravimetry and differential thermal analyzer (for example, STA7300 manufactured by Hitachi High-Tech Science Corporation).

Considering the measurement sample amount, the rate of temperature increase and the measurement temperature range, the effect of particle size on the weight reduction percentage is minor, and therefore the particle size of the sample is not restricted.

In the present embodiment, the lower limit for the weight reduction percentage 1 is preferably 0.03 wt%, more preferably 0.05 wt%, and particularly preferably 0.08 wt%. The upper limit for the weight reduction percentage 1 is preferably 0.14 wt%, more preferably 0.13 wt%, and particularly preferably 0.12 wt%.

The above upper limit and lower limit may be combined as desired. Examples of such combinations include cases in which the weight reduction percentage 1 is at least 0.03 wt% but not more than 0.14 wt%, at least 0.05 wt% but not more than 0.13 wt%, or at least 0.08 wt% but not more than 0.12 wt%.

The weight reduction observed in the thermogravimetric measurements may occur due to evaporation or thermal decomposition of raw materials contained in the lithium composite metal oxide, evaporation of water of crystallization contained in unreacted substances such as intermediate products, evaporation of water of crystallization contained in impurities, evaporation of adsorbed water bound to the sample surface, and thermal decomposition of compounds that exist at the particle surfaces.

The lithium composite metal oxide powder of the present embodiment contains core particles which represent the particle core, and a coating substance that coats the surfaces of the core particles. The coating substance contains compounds formed by the reaction of the element M and lithium. In the present embodiment, the core particles are primary particles and secondary particles in the lithium composite metal oxide powder, and contains at least Li, Ni, and the element X.

The coating substance is preferably a coating layer or coating particles. Examples of the compounds that form the coating substance include compounds in which the element M, lithium and oxygen are bonded together.

The fact that the discharge rate characteristic and the cycle characteristic improve when the lithium composite metal oxide of the present embodiment having a weight reduction percentage 1 of not more than 0.15 wt% is used as a lithium secondary battery positive electrode active material is described below using the case where the element M is boron as an example.

When the element M is boron, it is thought that a layer of a lithium-boron-oxygen compound is formed as the coating substance. Lithium-boron-oxygen compounds are stable until 500°C, but if the temperature is raised beyond 500°C, then evaporation and decomposition start to occur. Further, residual compounds of boron and oxygen (such as $B_2O_3$) which have unreacted with lithium also start to evaporate and decompose if the temperature is raised beyond 500°C.

The residual compounds of boron and oxygen which have unreacted with lithium undergo thermal decomposition more readily than lithium-boron-oxygen compounds. Accordingly, in those cases where the weight reduction percentage 1 is 0.15 wt% or less, it is assumed that the production amount of residual compounds of boron and oxygen which have unreacted with lithium is small.

Moreover, in those cases where lithium-boron-oxygen compounds are formed in excess, and the thickness of the layer of lithium-boron-oxygen compounds, namely the thickness of the coating substance, increases, the lithium composite metal oxide is more likely to exhibit a weight reduction percentage 1 that exceeds 0.15 wt%. Further, it is thought that the thickness of the coating substance also increases when a large amount of impurities is formed. Examples of these impurities include residual compounds of boron and oxygen (such as $B_2O_3$) which have unreacted with lithium. When the weight reduction percentage 1 exceeds 0.15 wt%, it is thought that a thick layer of lithium-boron-oxygen compounds or a thick coating substance containing impurities has been formed. This type of coating substance acts as a resistance layer during insertion and desorption of lithium.

For the reasons outlined above, it is surmised that the lithium composite metal oxide of the present embodiment has a coating substance with lithium ion conductivity formed appropriately on the surface of the core particles, and has only a minor resistance layer. As a result, it is thought that when the lithium composite metal oxide of the present embodiment is used as a lithium secondary battery positive electrode active material, the discharge rate characteristic and the cycle characteristic improve.

The lithium composite metal oxide powder of one embodiment of the present invention is preferably represented by a compositional formula (I) shown below.

$$Li[Li_m(Ni_{(1-n-p)}X_nM_p)_{1-m}]O_2 ... \qquad (I)$$

(wherein $-0.1 \leq m \leq 0.2$, $0 < n \leq 0.8$, $0 < p \leq 0.05$, and $n+p < 1$)

In compositional formula (I), from the viewpoint of improving the cycle characteristic, m preferably exceeds 0, and is more preferably at least 0.01, and particularly preferably 0.02 or greater. Further, from the viewpoint of obtaining a lithium secondary battery with a superior discharge rate characteristic, m is preferably not more than 0.1, more preferably not more than 0.08, and particularly preferably 0.06 or less.

The above upper limit and lower limit for m may be combined as desired.

In the present embodiment, it is preferable that $0 < m \leq 0.2$, more preferable that $0 < m \leq 0.1$, even more preferable that $0.01 \leq m \leq 0.08$, and particularly preferable that $0.02 \leq m \leq 0.06$.

In compositional formula (I), from the viewpoint of obtaining a lithium secondary battery having a superior discharge rate characteristic, it is preferable that $0 < n+p \leq 0.5$, more preferable that $0 < n+p \leq 0.25$, and even more preferable that $0 < n+p \leq 0.2$.

In compositional formula (I), from the viewpoint of obtaining a lithium secondary battery having low battery internal resistance, n is preferably at least 0.05, and more preferably 0.1 or greater. Further from the viewpoint of obtaining a lithium secondary battery having high thermal stability, n is preferably not more than 0.5, and more preferably 0.4 or less.

The upper limit and lower limit for n may be combined as desired.

In the present embodiment, it is preferable that $0 < n \leq 0.5$, more preferable that $0.05 \leq n \leq 0.5$, and even more preferable that $0.1 \leq n \leq 0.4$.

In compositional formula (I), from the viewpoint of improving the cycle characteristic, p is preferably at least 0.001, more preferably at least 0.005, even more preferably at least 0.010, and particularly preferably 0.015 or greater. Further, p is preferably not more than 0.04, more preferably not more than 0.03, and particularly preferably 0.025 or less.

The upper limit and lower limit for p may be combined as desired.

In the present embodiment, it is preferable that $0.001 \leq p \leq 0.05$, more preferable that $0.005 \leq p \leq 0.04$, even more preferable that $0.010 \leq p \leq 0.03$, and particularly preferable that $0.015 \leq p \leq 0.025$.

In terms of the combination of m, n and p, it is preferable that $0 < m \leq 0.1$ and $0 < n \leq 0.8$ and $0.001 \leq p \leq 0.05$.

In one embodiment of the present invention, the compositional formula (I) is preferably a compositional formula (1-1) shown below.

$$Li[Li_m(Ni_{(1-y-z-p)}Co_yQ_zM_p)_{1-m}]O_2 ... \qquad (I)-1$$

(wherein $-0.1 \leq m \leq 0.2$, $0 \leq y \leq 0.4$, $0 \leq z \leq 0.4$, $0 < p \leq 0.05$, $0 < y+z$, and $y+z+p < 1$, and the element Q is at least one element selected from the group consisting of Mn, Fe, Cu, Ti, Mg, Al, W, Mo, Nb, Zn, Sn, Zr, Ga and V.)

From the viewpoint of obtaining a lithium secondary battery having a superior cycle characteristic, in the above compositional formula (I)-1, it is preferable that $0 < y+z \leq 0.45$, more preferable that $0 < y+z+p \leq 0.21$, and even more preferable that $0 < y+z+p \leq 0.17$.

From the viewpoint of obtaining a lithium secondary battery having a superior cycle characteristic, in the above compositional formula (I)-1, it is preferable that $0 < y+z+p \leq 0.5$, more preferable that $0 < y+z+p \leq 0.25$, and even more preferable that 0<y+z+p≤0.2.

Further, from the viewpoint of obtaining a lithium secondary battery having low battery internal resistance, the value of y in the above compositional formula (I)-1 preferably exceeds 0, and is more preferably at least 0.05, even more preferably at least 0.01, and particularly preferably 0.05 or greater. Furthermore, from the viewpoint of obtaining a lithium secondary battery having high thermal stability, the value of y in the above compositional formula (I)-1 is preferably not more than 0.35, and more preferably 0.33 or less.

The upper limit and lower limit for y may be combined as desired.

In the present embodiment, it is preferable that 0<y≤0.35, more preferable that 0.005≤y≤0.35, even more preferable that 0.01≤y≤0.33, and particularly preferable that 0.05≤y≤0.33.

Furthermore, from the viewpoint of obtaining a lithium secondary battery having a superior cycle characteristic, the value of z in the above compositional formula (I)-1 preferably exceeds 0, and is more preferably at least 0.01, even more preferably at least 0.02, and particularly preferably 0.1 or greater. Further, from the viewpoint of obtaining a lithium secondary battery having superior storage properties at high temperature (for example, in an environment at 60°C), the value of z in the above compositional formula (I)-1 is preferably not more than 0.39, more preferably not more than 0.38, and even more preferably 0.35 or less.

The upper limit and lower limit for z may be combined as desired.

In the present embodiment, it is preferable that 0<z≤0.35, more preferable that 0.01≤z≤0.35, even more preferable that 0.02≤z≤0.35, and particularly preferable that 0.1≤z≤0.35.

<<Weight Reduction Percentage 2>>

The lithium composite metal oxide powder of one embodiment of the present invention preferably exhibits a weight reduction percentage 2, obtained when a thermogravimetric measurement is conducted under measurement conditions 2 described below, that is not more than 0.12 wt%.

(Measurement Conditions 2)

Sample: 10 mg of the lithium composite metal oxide powder
Measurement atmosphere: open air (gas flow rate: 220 mL/minute)
Measurement conditions: the temperature is raised from 40°C to 400°C at a rate of temperature increase of 10°C/minute, and the weight of the sample is measured when the temperature reaches 250°C, and then again when the temperature reaches 400°C.

Calculation method: Weight reduction percentage 2 (wt%) = [(weight (g) when the lithium composite metal oxide powder has been heated to 250°C - weight (g) when the lithium composite metal oxide powder has been heated to 400°C) / weight of the lithium composite metal oxide powder used in the thermogravimetric measurement prior to heating] × 100

Descriptions relating to the measurement device used for the thermogravimetric measurements, the weighing of the sample, and the particle size of the sample are the same as described above for the weight reduction percentage 1.

In the present embodiment, the lower limit for the weight reduction percentage 2 preferably exceeds 0 wt%, and is more preferably 0.01 wt%, even more preferably 0.02 wt%, and particularly preferably 0.03 wt%. The upper limit for the weight reduction percentage 2 is preferably 0.10 wt%, more preferably 0.08 wt%, and particularly preferably 0.06 wt%.

The above upper limit and lower limit may be combined as desired. Examples of such combinations include cases in which the weight reduction percentage 2 is at least 0.01 wt% but not more than 0.10 wt%, at least 0.02 wt% but not more than 0.08 wt%, or at least 0.03 wt% but not more than 0.06 wt%.

The fact that the discharge rate characteristic and the cycle characteristic improve when the lithium composite metal oxide powder of an embodiment of the present invention having a weight reduction percentage 2 of not more than 0.12 wt% is used as a lithium secondary battery positive electrode active material is described below using the case where the element M is boron as an example.

Details of the method used for producing the lithium composite metal oxide powder are described below, but the lithium composite metal oxide powder of one embodiment of the present invention is produced by adding a compound containing the element M to a raw material compound containing lithium (core particles), thereby form the coating substance. When the element M is boron, in those cases where the lithium compound (such as lithium hydroxide) used when producing the raw material compound is retained without reacting with the boron compound, increasing the temperature to 250°C or higher causes the lithium compound and boron to react, forming a lithium-boron-oxygen compound. During this process, water is generated as a by-product. The generated water evaporates during the temperature raising. It is thought that the weight reduction percentage 2 increases when this amount of water evaporation is large.

In other words, it is thought that the lithium composite metal oxide powder of an embodiment of the present invention for which the weight reduction percentage 2 exceeds 0 wt% but is not more than 0.12 wt% contains a coating substance in which the lithium and boron have reacted satisfactorily.

In this type of lithium composite metal oxide powder of the present embodiment, it is thought that a coating substance containing few impurities uniformly coats the surface of the core particles. In such a case, it is surmised that the amount of resistance layer formed during insertion and desorption of lithium is minor.

For the reasons outlined above, it is surmised that the lithium composite metal oxide of the present embodiment has a coating substance with lithium ion conductivity formed appropriately on the surface of the core particles, and has only a minor resistance layer. As a result, it is thought that when the lithium composite metal oxide of the present embodiment is used as a lithium secondary battery positive electrode active material, the discharge rate characteristic and the cycle characteristic improve.

In the present embodiment, the existence or absence of a coating substance, and confirmation of the composition can be determined by TEM-EELS line analysis, inductively coupled plasma emission analysis and/or electron beam microanalyzer analysis or the like of a cross-section of the lithium composite metal oxide powder. Confirmation of the crystal structure of the coating substance can be made using powder X-ray diffraction or electron beam diffraction. TEM refers to an transmission electron microscope, and EELS means electron energy loss spectroscopy.

For example, TEM-EELS line analysis of a cross-section of the lithium composite metal oxide powder is conducted in the following manner. Particles of the lithium composite metal oxide powder to be measured are converted to a thin film using a focused ion beam device (FIB), a particle cross-section is then observed using an analytical electron microscope (for example, ARM 200F manufactured by JEOL Ltd.), and TEM-EELS line analysis is then conducted from the outermost surface of each particle toward the particle center using an EELS detector (Quantum ER manufactured by Gatan, Inc.).

Further, compositional analysis by inductively coupled plasma emission analysis is conducted in the following manner. The lithium composite metal oxide powder is dissolved in hydrochloric acid, and a compositional analysis is then conducted using an inductively coupled plasma emission analyzer (SPS3000 manufactured by SII NanoTechnology Inc.)

Electron beam microanalyzer analysis is conducted in the following manner. Particles of the lithium composite metal oxide powder to be measured are processed using a focused ion beam device (FIB) to create a particle cross-section, this particle cross-section is observed with an electron probe microanalyzer (for example, JXA-8230 manufactured by JEOL Ltd.), and line analysis is performed from the outermost surface of each particle toward the particle center.

The lithium composite metal oxide powder of one embodiment of the present invention preferably has a BET specific surface area of at least 0.1 m$^2$/g but not more than 3 m$^2$/g.

The BET specific surface area of the lithium composite metal oxide powder of the present embodiment is more preferably at least 0.2 m$^2$/g, even more preferably at least 0.3 m$^2$/g, and particularly preferably 0.5 m$^2$/g or greater. Further, the BET specific surface area is more preferably not more than 3.0 m$^2$/g, even more preferably not more than 2.5 m$^2$/g, particularly preferably not more than 2.0 m$^2$/g, and still more preferably 1.5 m$^2$/g or less. The above upper limit and lower limit may be combined as desired. In the present embodiment, among the various possibilities, the BET specific surface area of the lithium composite metal oxide powder is preferably at least 0.5 m$^2$/g but not more than 1.5 m$^2$/g. By ensuring that the BET specific surface area falls within the above range, a lithium composite metal oxide having a coating substance of uniform thickness at the surface can be obtained more easily.

The BET specific surface area (units: m$^2$/g) of the lithium composite metal oxide powder can be obtained, for example, by drying 1 g of the lithium composite metal oxide powder under a nitrogen atmosphere at 105°C for 30 minutes, and then conducting a measurement using a BET specific surface area analyzer (for example, Macsorb (a registered trademark) manufactured by Mountech Co., Ltd.).

The lithium composite metal oxide powder of the present invention preferably has an average primary particle size of at least 0.1 μm but not more than 10 μm.

The average primary particle size of the lithium composite metal oxide powder of an embodiment of the present invention is more preferably at least 0.5 μm, even more preferably at least 0.8 μm, and particularly preferably 1 μm or

greater.

Further, the average primary particle size is more preferably not more than 8 $\mu$m, even more preferably not more than 5 $\mu$m, and particularly preferably 4 $\mu$m or less.

In one embodiment of the present invention, the 50% cumulative volume particle size ($D_{50}$) determined from a particle size distribution measurement of the primary particles and secondary particles is preferably at least 1 $\mu$m but not more than 10 $\mu$m.

The 50% cumulative volume particle size ($D_{50}$) of the lithium composite metal oxide powder of the present embodiment is more preferably at least 1.5 $\mu$m, even more preferably at least 2 $\mu$m, and particularly preferably 3 $\mu$m or greater. Further, the 50% cumulative volume particle size ($D_{50}$) is more preferably not more than 8 $\mu$m, even more preferably not more than 7 $\mu$m, and particularly preferably 6 $\mu$m or less.

The above upper limit and lower limit may be combined as desired. In the present embodiment, among the various possibilities, the 50% cumulative volume particle size ($D_{50}$) of the lithium composite metal oxide powder is preferably at least 3 $\mu$m but not more than 6 $\mu$m. By ensuring that the 50% cumulative volume particle size ($D_{50}$) falls within the above range, a lithium composite metal oxide having a coating substance of uniform thickness at the surface can be obtained more easily.

The cumulative volume particle size distribution is measured using a laser diffraction and scattering method. First, 250 $\mu$L of an aqueous solution prepared using 10 mass% sodium hexametaphosphate as the dispersion medium is placed in a laser diffraction and scattering particle size distribution analyzer (for example, Microtrac MT3300EXII manufactured by MicrotracBEL Corporation), the particle size distribution is measured, and a volume-based cumulative particle size distribution curve is obtained. The lithium composite metal oxide powder is added in an amount sufficient to achieve a transmittance of 85$\pm$5% during measurement. In the obtained cumulative particle size distribution curve, the value of the particle size at the point where the cumulative volume reaches 50% from the small particle side is deemed the 50% cumulative volume particle size ($D_{50}$ ($\mu$m)).

(Layered Structure)

In an embodiment of the present invention, the crystal structure of the lithium composite metal oxide powder is a layered structure, and is preferably a hexagonal crystal structure or a monoclinic crystal structure.

The hexagonal crystal structure belongs to one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm and $P6_3$/mmc.

Further, the monoclinic crystal structure belongs to one space group selected from the group consisting of P2, $P2_1$, C2, Pm, Pc, Cm, Cc, P2/m, $P2_1$/m, C2/m, P2/c, $P2_1$/c and C2/c.

Among these, in order to obtain a lithium secondary battery having a high discharge capacity, it is particularly preferable that the crystal structure is a hexagonal crystal structure belonging to the space group R-3m, or a monoclinic crystal structure belonging to C2/m.

<Method for Producing Lithium Composite Metal Oxide Powder>

A method for producing the lithium composite metal oxide powder according to an embodiment of the present invention includes a step of mixing a lithium secondary battery positive electrode active material precursor and a lithium compound to obtain a mixture, a step of firing this mixture to obtain a raw material compound, and a step of adding a compound containing the element M to the raw material compound.

[Step of Obtaining Mixture]

This step is a step of mixing the lithium compound and the precursor to obtain a mixture.

- Precursor

In order to produce the lithium composite metal oxide powder, first, a lithium secondary battery positive electrode active material precursor is produced.

The precursor is a composite metal compound containing Ni and the element X (at least one metal selected from the group consisting of Co, Mn, Fe, Cu, Ti, Mg, Al, W, Mo, Nb, Zn, Sn, Zr, Ga and V). The composite metal compound is preferably a composite metal hydroxide or a composite metal oxide.

In the following description, the lithium secondary battery positive electrode active material precursor may sometimes be referred to as "the precursor" or "the composite metal compound".

(Production Step for Composite Metal Compound)

The composite metal compound can be produced by the conventionally used batch coprecipitation method or continuous coprecipitation method. In the following description, this production method is described in detail using a composite metal hydroxide containing the metals nickel, cobalt and manganese as an example.

First, the coprecipitation method, and in particular the continuous method disclosed in JP 2002-201028 A, is used to react a nickel salt solution, a cobalt salt solution, a manganese salt solution and a complexing agent to produce a nickel-cobalt-manganese composite metal hydroxide.

There are no particular limitations on the nickel salt that represents the solute of the above nickel salt solution, and for example, any salt from among nickel sulfate, nickel nitrate, nickel chloride and nickel acetate may be used. For the cobalt salt that represents the solute of the above cobalt salt solution, for example, any salt from among cobalt sulfate, cobalt nitrate and cobalt chloride may be used. For the manganese salt that represents the solute of the above manganese salt solution, for example, any salt from among manganese sulfate, manganese nitrate and manganese chloride may be used.

The metal salts described above are used in a ratio that corresponds with the compositional ratio of the above formula (I). In other words, the metal salts are used in a ratio that satisfies nickel salt: (cobalt salt + manganese salt) = (1-n):n.

Further, in those cases where the metal salts are used in a ratio that corresponds with the compositional ratio of the above formula (1)-1, the salts may be used, for example, in a ratio that satisfies nickel salt: cobalt salt: (manganese salt + zirconium salt) = (1-y-z):y:z. Furthermore, water is used as the solvent medium for the nickel salt solution, the cobalt salt solution, the manganese salt solution, and the zirconium salt solution.

The complexing agent is a substance that can form complexes with the ions of nickel, cobalt and manganese in the aqueous solution. Examples include ammonium ion donors (such as ammonium sulfate, ammonium chloride, ammonium carbonate and ammonium fluoride), as well as hydrazine, ethylenediaminetetraacetic acid, nitrilotriacetic acid, uracildiacetic acid and glycine. A complexing agent may or may not be included. In those cases where a complexing agent is included, the amount of the complexing agent in the mixed liquid containing the nickel, cobalt and manganese metal salt solutions and the complexing agent, for example, expressed as a molar ratio relative to the total number of moles of the nickel, cobalt and manganese metal salts, is greater than 0 but not more than 2.

During the batch coprecipitation method or continuous coprecipitation method, an alkali metal hydroxide (for example, sodium hydroxide or potassium hydroxide) may be added, if necessary, to adjust the pH of the aqueous solution.

During the reaction, the temperature inside the reaction tank is, for example, controlled within a range from at least 20°C to not more than 80°C, and preferably from at least 30°C to not more than 70°C

The pH inside the reaction tank when, for example, the temperature of the aqueous solution is 40°C, is typically controlled within a range from at least pH 9 to not more than pH 13, and preferably from at least pH 10 to not more than pH 12.5.

The contents inside the reaction tank are stirred appropriately. By holding the temperature of the reaction tank at 40°C or higher, and mixing and stirring the various solutions under conditions that yield a ratio of the mass of the nickel, cobalt and manganese metals relative to the mass of the alkali metal hydroxide of at least 0.9, the particle size ($D_{50}$) of the nickel-cobalt-manganese composite metal hydroxide can be controlled within the desired range for the present invention. The reaction tank may use an overflow-type tank to enable separation of the formed reaction precipitate.

Furthermore, the inside of the reaction tank may be held under an inert atmosphere, under a suitable oxygen-containing atmosphere, or in the presence of an oxidizing agent. In order to place the inside of the reaction tank under an oxygen-containing atmosphere, an oxygen-containing gas may be introduced into the reaction tank.

Examples of the oxygen-containing gas include oxygen gas, air, or a mixed gas of one of these oxygen-containing gases and an oxygen-free gas such as nitrogen gas. From the viewpoint of facilitating the adjustment of the oxygen concentration in the oxygen-containing gas, a mixed gas is preferable from among the above options.

By appropriately controlling the concentration of metal salts supplied to the reaction tank, the stirring speed, the reaction temperature, the reaction pH, and the firing conditions described below and the like, the physical properties of the finally obtained lithium secondary battery positive electrode active material can be controlled to achieve the desired values.

Following the reactions described above, the obtained reaction precipitate is washed with water and dried, and a nickel-cobalt-manganese composite hydroxide is isolated as a nickel-cobalt-manganese composite compound. Further, if necessary, the precipitate may be washed with a weak acid solution or an alkaline solution containing sodium hydroxide or potassium hydroxide. In the above example, a nickel-cobalt-manganese composite hydroxide is produced as the precursor, but a nickel-cobalt-manganese composite oxide may also be prepared. For example, a nickel-cobalt-manganese composite oxide may be prepared by firing the nickel-cobalt-manganese composite hydroxide. The firing time, expressed as the total length of time from the start of temperature increase until the target temperature is reached and the holding period at that temperature has been completed, is preferably at least one hour but not more than 30 hours.

The rate of temperature increase during the heating step used to reach the maximum holding temperature is preferably at least 180°C/hour, more preferably at least 200°C/hour, and particularly preferably 250°C/hour or greater. Air or oxygen is preferably used as the gas for forming the oxidizing atmosphere.

When producing the composite oxide of nickel and the element X from the composite hydroxide of nickel and the element X (the nickel-cobalt-manganese composite hydroxide in the specific example used in this description), an oxide-forming step for achieving the conversion to an oxide may be performed by heating at a temperature of at least 300°C but not more than 800°C for a period of at least one hour but not more than 10 hours.

- Lithium Compound

The lithium compound used in the present invention may use any one of lithium carbonate, lithium nitrate, lithium acetate, lithium hydroxide, lithium oxide, lithium chloride and lithium fluoride, or a mixture of two or more of these compounds may be used. Among these compounds, the use of one or both of lithium hydroxide and lithium carbonate is preferable.

Further, in those cases where the lithium hydroxide contains lithium carbonate as an impurity, the amount of lithium carbonate within the lithium hydroxide is preferably not more than 5 mass%.

The method used for mixing the precursor and the lithium compound is described below. After drying, the precursor is mixed with the lithium compound. There are no particular limitations on the drying conditions, and for example, any of the following drying conditions 1) to 3) may be used.

1) Conditions under which the precursor is neither oxidized nor reduced. Specifically, drying conditions under which an oxide is retained as an oxide, or drying conditions under which a hydroxide is retained as a hydroxide.
2) Conditions under which the precursor is oxidized. Specifically, drying conditions under which a hydroxide is oxidized to an oxide.
3) Conditions under which the precursor is reduced. Specifically, drying conditions under which a oxide is reduced to a hydroxide.

In order to ensure conditions under which neither oxidation nor reduction occurs, an inert gas such as nitrogen, helium or argon may be used, whereas for conditions under which a hydroxides is oxidized, oxygen or air may be used.

Further, for conditions under which the precursor is reduced, a reducing agent such as hydrazine or sodium sulfite may be used under an inert gas atmosphere.

Following drying of the precursor, an appropriate classification of the precursor may be conducted.

The above lithium compound and precursor are mixed with due consideration of the compositional ratio of the final target product. For example, the precursor is mixed with the lithium compound so that the ratio of the number of lithium atoms relative to the total number of metal atoms contained in the composite metal oxide or composite metal hydroxide is greater than 1.0. In other words, the lithium compound and the nickel-cobalt-manganese composite hydroxide are mixed so as to achieve a molar ratio between lithium and the total of all other metal elements excluding lithium (the total of all elements X) that exceeds 1.

The ratio of the number of lithium atoms relative to the total number of other metal atoms is preferably at least 1.05, and more preferably 1.10 or greater. Further, the ratio is preferably not more than 1.30, and more preferably 1.20 or less. The upper limit and lower limit for this ratio of the number of lithium atoms relative to the number of other metal atoms may be combined as desired, and for example, the ratio may be at least 1.05 but not more than 1.30, or at least 1.10 but not more than 1.20. By firing the mixture of the precursor and the lithium compound obtained in this manner in a subsequent firing step, a raw material compound that functions as a lithium-nickel-containing composite metal oxide can be obtained as a raw material compound.

[Step for Obtaining Raw Material Compound]

This step is a step of firing the mixture of the lithium compound and the precursor obtained in the step described above, thus obtaining a raw material compound.

During the firing, dry air, an oxygen atmosphere or an inert gas atmosphere or the like is used in accordance with the desired composition, and if necessary, a plurality of heating steps may be conducted.

Although there are no particular limitations on the firing temperature for the mixture of the precursor and the above lithium compound, the temperature is, for example, preferably at least 600°C but not more than 1,100°C, and more preferably at least 650°C but not more than 1,050°C.

Provided the firing temperature is at least as high as the above lower limit, namely at least 600°C, a lithium secondary battery positive electrode active material having a strong crystal structure can be obtained. Further, provided the firing temperature is not higher than the above upper limit, namely not higher than 1,100°C, volatilization of lithium from the surfaces of the secondary particles can be reduced.

In this description, the firing temperature means the temperature of the atmosphere inside the furnace, and also means the maximum temperature for the holding temperature during the firing step (hereafter sometimes referred to as the maximum holding temperature), and in the case of a firing step having a plurality of heating steps, means the temperature, among the various heating steps, when heating is conducted at the maximum holding temperature.

The firing time is preferably at least 3 hours but not more than 50 hours. If the firing time exceeds 50 hours, then the battery performance tends to materially deteriorate due to volatilization of lithium. If the firing time is less than 3 hours, then crystal development tends to be poor, and the battery performance tends to worsen. Conducting pre-firing prior to the firing described above is also effective. Pre-firing is preferably conducted at a temperature within a range from at least 300°C to not more than 850°C for a period of 1 to 10 hours.

In one embodiment of the present invention, the rate of temperature increase in the heating step that reaches the maximum holding temperature is preferably at least 80°C/hour, more preferably at least 100°C/hour, and particularly preferably 150°C/hour or greater.

The rate of temperature increase in the heating step that reaches the maximum holding temperature is calculated from the time, in the firing device, from the time the temperature increase is started until the time the holding temperature described below is reached.

The firing step preferably has a plurality of heating steps with different heating temperatures. For example, the firing step preferably has a first firing stage, and a second firing stage in which firing is conducted at a higher temperature than the first firing stage. The firing step may also have further additional firing stages using different firing temperatures and firing times.

By firing the mixture in the manner described above, a raw material compound is obtained.

[Step of Adding Compound Containing Element M]

The compound containing the element M is preferably a compound having a melting point of 550°C or lower, and specific examples include $Na_2S_2O_3 \cdot 5H_2O$, $S_8$, $H_4P_2O_7$, $Na_4P_2O_7 \cdot 10H_2O$, $H_3BO_3$, $C_6H_{18}O_3Si_3$, $HBO_2$ and $B_2O_3$.

There are no particular limitations on the mixed amount of the compound containing the element M, but for example, the mixed amount relative to the total amount (100 mol%) added of the raw material compound obtained in the step described above is preferably greater than 0 mol% but not more than 5 mol%, more preferably at least 0.5 mol% but not more than 4 mol%, and particularly preferably at least 1 mol% but less than 3 mol%. The "total amount added of the raw material compound" indicates the total amount of nickel and the element X.

By controlling the mixed amount of the compound containing the element M, the values for the weight reduction percentage 1 and the weight reduction percentage 2 in thermogravimetric measurements of the lithium composite metal oxide powder of the present embodiment can be adjusted to values within the ranges specified for the present embodiment.

Specifically, the smaller the mixed amount of the compound containing the element M, the more easily the weight reduction percentage 1 and the weight reduction percentage 2 can be controlled to low values.

Following mixing of the compound containing the element M and the raw material compound, the mixture of the raw material compound and the compound containing the element M is subjected to a heat treatment in an atmosphere of a dehumidified oxidizing gas. Air or oxygen is preferable as the type of oxidizing gas. An example of the humidity is a value of 30% or lower.

There are no particular limitations on the temperature of the heat treatment, but for example, a temperature exceeding 200°C but not more than 500°C is preferable, and a temperature of at least 300°C but not more than 500°C is more preferable. Provided the heat treatment temperature is at least as high as the above lower limit, namely exceeds 200°C, formation of a lithium-boron-oxygen compound can be promoted. Further, provided the heat treatment temperature is not higher than the above upper limit, namely not higher than 500°C, decomposition of the lithium-boron-oxygen compound at the surfaces of the secondary particles can be reduced.

The heat treatment is preferably conducted for 1 to 10 hours. In the present embodiment, the heat treatment temperature is preferably a lower temperature than the firing temperature described above.

By controlling the heat treatment temperature, the values for the weight reduction percentage 1 and the weight reduction percentage 2 in thermogravimetric measurements of the lithium composite metal oxide powder of the present embodiment can be adjusted to values within the ranges specified for the present embodiment.

Specifically, the higher the temperature of the heat treatment within the above heat treatment temperature range, the more easily the weight reduction percentage 1 and the weight reduction percentage 2 can be controlled to low values.

By conducting the steps described above, a coating substance that is a lithium-boron-oxygen compound is formed on the surfaces of the core particles.

[Optional Steps]

- Washing Step

In one embodiment of the present invention, the lithium-nickel-containing composite metal oxide used as the raw material compound is preferably washed using either pure water or an alkaline wash solution as the wash liquid.

Examples of the alkaline wash solution include aqueous solutions of one or more anhydrous compounds selected from the group consisting of LiOH (lithium hydroxide), NaOH (sodium hydroxide), KOH (potassium hydroxide), Li2CO$_3$ (lithium carbonate), Na$_2$CO3 (sodium carbonate), K$_2$CO3 (potassium carbonate) and (NH$_4$)$_2$CO3 (ammonium carbonate), and aqueous solutions of the hydrates of the above anhydrous compounds. Further, ammonia may also be used as the alkali.

In the washing step, examples of the method used for bringing the wash liquid and the lithium composite metal oxide powder into contact include methods in which the lithium composite metal oxide powder is placed in any of the various wash liquids and stirred, methods in which any of the various wash liquids is used as a shower that is sprayed onto the lithium composite metal oxide powder, and methods in which the lithium composite metal oxide powder is placed in any of the various wash liquids and stirred, the lithium composite metal oxide powder is then separated from the wash liquid, and any of the various wash liquids is then used as a shower that is sprayed onto the separated lithium composite metal oxide powder.

The temperature of the wash liquid used in the washing is preferably not more than 15°C, more preferably not more than 10°C, and even more preferably 8°C or lower. By controlling the temperature of the wash liquid to a temperature within the above range at which the wash liquid does not freeze, excessive elution of lithium ions from the crystal structure of the lithium composite metal oxide powder into the wash liquid during washing can be suppressed.

In one embodiment of the present invention, the mixture of the lithium compound described above and the precursor may be fired in the presence of an inert flux.

By conducting the firing of the mixture in the presence of an inert flux, reaction of the mixture can be accelerated. The inert flux may be retained in the lithium composite metal oxide powder obtained following firing, or may be removed by washing the fired product with a wash liquid or the like. In one embodiment of the present invention, the lithium composite metal oxide powder that has been fired in the presence of an inert flux is preferably washed using pure water or a wash liquid such as an alkaline wash solution.

In one embodiment of the present invention, in the case where an inert flux is added in the step of obtaining the mixture, the firing temperature and the total time may be adjusted appropriately within the ranges described above.

There are no particular limitations on the types of inert flux that can be used in the present embodiment, provided the flux is resistant to reaction with the mixture during firing. In one embodiment of the present invention, examples of the inert flux include one or more compounds selected from the group consisting of fluorides of one or more elements (hereinafter jointly referred to as "A") selected from the group consisting of Na, K, Rb, Cs, Ca, Mg, Sr and Ba, chlorides of A, carbonates of A, sulfates of A, nitrates of A, phosphates of A, hydroxides of A, molybdates of A and tungstates of A.

Examples of the fluorides of A include NaF (melting point: 993°C), KF (melting point: 858°C), RbF (melting point: 795°C), CsF (melting point: 682°C), CaF$_2$ (melting point: 1,402°C), MgF$_2$ (melting point: 1,263°C), SrF$_2$ (melting point: 1,473°C) and BaF$_2$ (melting point: 1,355°C).

Examples of the chlorides of A include NaCl (melting point: 801°C), KCl (melting point: 770°C), RbCl (melting point: 718°C), CsCl (melting point: 645°C), CaCl$_2$ (melting point: 782°C), MgCl$_2$ (melting point: 714°C), SrCl$_2$ (melting point: 857°C) and BaCl$_2$ (melting point: 963°C).

Examples of the carbonates of A include Na$_2$CO$_3$ (melting point: 854°C), K$_2$CO$_3$ (melting point: 899°C), Rb$_2$CO3 (melting point: 837°C), Cs$_2$CO$_3$ (melting point: 793°C), CaCO$_3$ (melting point: 825°C), MgCO$_3$ (melting point: 990°C), SrCO$_3$ (melting point: 1,497°C) and BaCO$_3$ (melting point: 1,380°C).

Examples of the sulfates of A include Na$_2$SO$_4$ (melting point: 884°C), K$_2$SO$_4$ (melting point: 1,069°C), Rb$_2$SO$_4$ (melting point: 1,066°C), Cs$_2$SO$_4$ (melting point: 1,005°C), CaSO$_4$ (melting point: 1,460°C), MgSO$_4$ (melting point: 1,137°C), SrSO$_4$ (melting point: 1,605°C) and BaSO$_4$ (melting point: 1,580°C).

Examples of the nitrates of A include NaNO$_3$ (melting point: 310°C), KNO$_3$ (melting point: 337°C), RbNO$_3$ (melting point: 316°C), CsNO$_3$ (melting point: 417°C), Ca(NO$_3$)$_2$ (melting point: 561°C), Mg(NO$_3$)$_2$, Sr(NO$_3$)$_2$ (melting point: 645°C) and Ba(NO$_3$)$_2$ (melting point: 596°C).

Examples of the phosphates of A include Na$_3$PO$_4$, K$_3$PO$_4$ (melting point: 1,340°C), Rb$_3$PO$_4$, Cs$_3$PO$_4$, Ca$_3$(PO$_4$)$_2$, Mg$_3$(PO$_4$)$_2$ (melting point: 1,184°C), Sr$_3$(PO$_4$)$_2$ (melting point: 1,727°C) and Ba$_3$(PO$_4$)$_2$ (melting point: 1,767°C).

Examples of the hydroxides of A include NaOH (melting point: 318°C), KOH (melting point: 360°C), RbOH (melting point: 301°C), CsOH (melting point: 272°C), Ca(OH)$_2$ (melting point: 408°C), Mg(OH)$_2$ (melting point: 350°C), Sr(OH)$_2$ (melting point: 375°C) and Ba(OH)$_2$ (melting point: 853°C).

Examples of the molybdates of A include Na$_2$MoO$_4$ (melting point: 698°C), K$_2$MoO$_4$ (melting point: 919 °C),

$Rb_2MoO_4$ (melting point: 958 °C), $Cs_2MoO_4$ (melting point: 956 °C), $CaMoO_4$ (melting point: 1,520°C), $MgMoO_4$ (melting point: 1,060°C), $SrMoO_4$ (melting point: 1,040°C) and $BaMoO_4$ (melting point: 1,460°C).

Examples of the tungstates of A include $Na_2WO_4$ (melting point: 687°C), $K_2WO_4$, $Rb_2WO_4$, $Cs_2WO_4$, $CaWO_4$, $MgWO_4$, $SrWO_4$ and $BaWO_4$.

In the present embodiment, two or more of these inert fluxes may also be used. In those cases where two or more inert fluxes are used, the melting point may sometimes decrease. Further, among these inert fluxes, in order to obtain a lithium composite metal oxide powder of higher crystallinity, a carbonate, sulfate or chloride of A, or a combination thereof, is preferable. Furthermore, A is preferably either one or both of sodium (Na) and potassium (K). In other words, among the materials mentioned above, particularly preferable inert fluxes include one or more fluxes selected from the group consisting of NaOH, KOH, NaCl, KCl, $Na_2CO_3$, $K_2CO_3$, $Na_2SO_4$ and $K_2SO_4$.

In the present embodiment, potassium sulfate or sodium sulfate is preferable as the inert flux.

In the present embodiment, even in those cases where the inert flux is added in the step of adding the compound containing the element M, washing may be conducted appropriately within the ranges outlined above.

The obtained lithium composite metal oxide powder may be crushed and then suitably classified to obtain a lithium secondary battery positive electrode material that can be used in a lithium secondary battery.

<Lithium Secondary Battery>

Next is a description of the structure of a lithium secondary battery that represents an ideal application for the positive electrode active material of an embodiment of the present invention.

Further, a positive electrode that represents an ideal application of a lithium secondary battery positive electrode active material containing the positive electrode active material of an embodiment of the present invention is also described.

Moreover, a lithium secondary battery that represents an ideal application of the positive electrode is also described.

One example of a lithium secondary battery that is an ideal application of the positive electrode active material of an embodiment of the present invention has a positive electrode and a negative electrode, a separator sandwiched between the positive electrode and the negative electrode, and an electrolyte solution disposed between the positive electrode and the negative electrode.

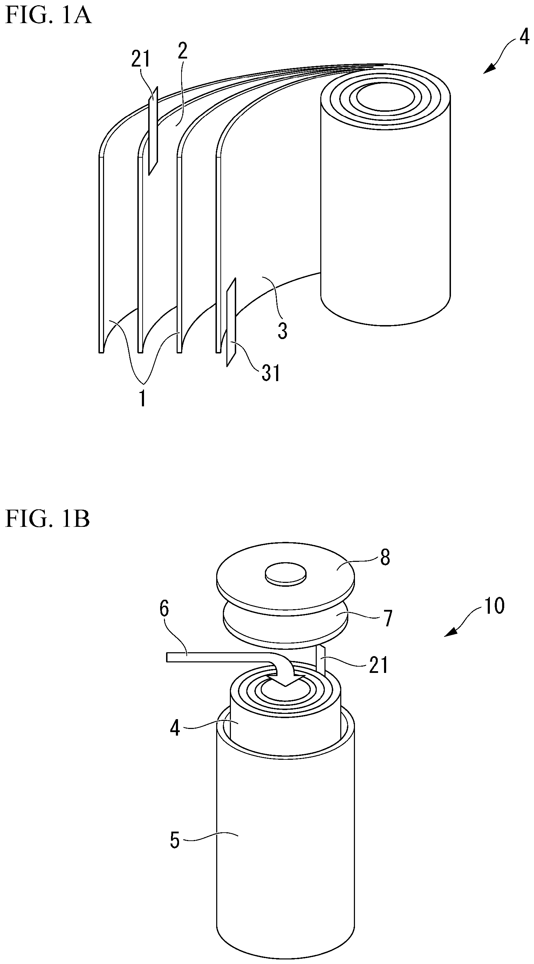

FIG. 1A and FIG. 1B are schematic diagrams illustrating one example of a lithium secondary battery. The circular cylindrical lithium secondary battery 10 is produced in the following manner.

First, as illustrated in FIG. 1A, a pair of belt-like separators 1, a belt-like positive electrode 2 having a positive electrode lead 21 at one end, and a belt-like negative electrode 3 having a negative electrode lead 31 at one end are stacked in an order: separator 1, positive electrode 2, separator 1, negative electrode 3, and the stacked structure is then wound to form an electrode group 4.

Subsequently, as illustrated in FIG. 1B, the electrode group 4 and an insulator not shown in the drawing are placed inside a battery can 5, the bottom of the can is sealed, and the electrode group 4 is immersed in an electrolyte solution 6 so that the electrolyte is disposed in the spaces between the positive electrode 2 and the negative electrode 3. By subsequently sealing the top of the battery can 5 with a top insulator 7 and a sealing body 8, a lithium secondary battery 10 can be produced.

Examples of the shape of the electrode group 4 include columnar shapes which yield a cross-sectional shape upon cutting the electrode group 4 in a direction perpendicular to the winding axis of the electrode group 4 that is, for example, circular, elliptical, rectangular, or rectangular with rounded corners.

Further, the shape of the lithium secondary battery having this type of electrode group 4 may also adopt the IEC 60086 standard for batteries prescribed by the International Electrotechnical Commission (IEC), or the shape prescribed in JIS C 8500. Examples of these shapes include circular cylindrical shapes and rectangular shapes.

Moreover, the lithium secondary battery is not limited to the wound structure described above, and may also have a stacked structure in which layered structures containing a positive electrode, a separator, a negative electrode and a separator are repeatedly stacked on top of one another. Examples of stacked lithium secondary batteries include so-called coin batteries, button batteries, and paper (or sheet) batteries.

Each of the structural components is described below in order.

(Positive Electrode)

The positive electrode can be produced by first preparing a positive electrode mixture containing a positive electrode active material, a conductive material and a binder, and then supporting this positive electrode mixture on a positive electrode collector.

(Conductive Material)

A carbon material can be used as the conductive material of the positive electrode. Examples of the carbon material include graphite powder, carbon black (for example, acetylene black), and fibrous carbon materials. Carbon black has fine particles and a large surface area, and therefore the conductivity inside the positive electrode can be enhanced by adding only a small amount to the positive electrode mixture, meaning the charge/discharge efficiency and the output characteristics can be improved, but if too much carbon black is added, then the binding strength between the positive electrode mixture and the positive electrode collector provided by the binder and the binding strength within the interior of the positive electrode mixture both tend to decrease, which may actually cause an increase in the internal resistance.

The proportion of the conductive material in the positive electrode mixture is preferably at least 5 parts by mass but not more than 20 parts by mass per 100 parts by mass of the positive electrode active material. In those cases where a fibrous carbon material such as graphitized carbon fiber or carbon nanotubes is used as the conductive material, this proportion may be lowered.

(Binder)

A thermoplastic resin can be used as the binder of the positive electrode. Examples of the thermoplastic resin include fluororesins such as polyvinylidene fluoride (hereinafter sometimes referred to as PVdF), polytetrafluoroethylene (hereinafter sometimes referred to as PTFE), tetrafluoroethylene-hexafluoropropylene-vinylidene fluoride-based copolymers, hexafluoropropylene-vinylidene fluoride-based copolymers and tetrafluoroethylene-perfluoro vinyl ether-based copolymers; and polyolefin resins such as polyethylene and polypropylene.

Mixtures of two or more of these thermoplastic resins may also be used. By using a fluororesin and a polyolefin resin as the binder, and setting the proportion of the fluororesin to at least 1 mass% but not more than 10 mass%, and the proportion of the polyolefin resin to at least 0.1 mass% but not more than 2 mass% mass, relative to the total mass of the positive electrode mixture, a positive electrode mixture can be obtained that exhibits both superior binding strength with the positive electrode collector and superior binding strength within the interior of the positive electrode mixture.

(Positive Electrode Collector)

A belt-like member formed using a metal material such as Al, Ni or stainless steel as the forming material can be used as the positive electrode collector of the positive electrode. Among the various possibilities, in terms of ease of processability and affordability, Al is preferably used as the forming material, and is preferably processed into a thin film-like form.

An example of the method used for supporting the positive electrode mixture on the positive electrode collector is a method in which the positive electrode mixture is press-molded on top of the positive electrode collector. Further, the positive electrode mixture may also be supported on the positive electrode collector by converting the positive electrode mixture to paste form using an organic solvent, coating and then drying the obtained paste of the positive electrode mixture on at least one surface of the positive electrode collector, and then fixing the paste to the collector by pressing.

Examples of organic solvents that can be used when converting the positive electrode mixture to paste form include amine-based solvents such as N,N-dimethylaminopropylamine and diethylenetriamine, ether-based solvents such as tetrahydrofuran, ketone-based solvents such as methyl ethyl ketone, ester-based solvents such as methyl acetate, and amide-based solvents such as dimethylacetamide and N-methyl-2-pyrrolidone (hereinafter sometimes referred to as NMP).

Examples of the method used for coating the paste of the positive electrode mixture onto the positive electrode collector include slit die coating methods, screen coating methods, curtain coating methods, knife coating methods, gravure coating methods and electrostatic spray methods.

By using the methods described above, the positive electrode can be produced.

(Negative Electrode)

The negative electrode of the lithium secondary battery may be any material that can be doped and undoped with lithium ions at a lower potential than the positive electrode, and examples include electrodes prepared by supporting a negative electrode mixture containing a negative electrode active material on a negative electrode collector, and electrodes composed solely of a negative electrode active material.

(Negative Electrode Active Material)

Examples of the negative electrode active material of the negative electrode include carbon materials, chalcogen compounds (such as oxides and sulfides), nitrides, metals or alloys that can be doped and undoped with lithium ions at a lower potential than the positive electrode.

Examples of carbon materials that can be used as the negative electrode active material include graphite such as natural graphite or artificial graphite, coke, carbon black, pyrolytic carbon, carbon fiber, and fired organic polymer compounds.

Examples of oxides that can be used as the negative electrode active material include oxides of silicon represented by the formula $SiO_x$ (wherein x is a positive real number) such as $SiO_2$ and SiO, oxides of titanium represented by the formula $TiO_x$ (wherein x is a positive real number) such as $TiO_2$ and TiO, oxides of vanadium represented by the formula $VO_x$ (wherein x is a positive real number) such as $V_2O_5$ and $VO_2$, oxides of iron represented by the formula $FeO_x$ (wherein x is a positive real number) such as $Fe_3O_4$, $Fe_2O_3$ and FeO, oxides of tin represented by the formula $SnO_x$ (wherein x is a positive real number) such as $SnO_2$ and SnO, oxides of tungsten represented by the general formula $WO_x$ (wherein x is a positive real number) such as $WO_3$ and $WO_2$, and composite metal oxides containing lithium and titanium or vanadium such as $Li_4Ti_5O_{12}$ and $LiVO_2$.

Examples of sulfides that can be used as the negative electrode active material include sulfides of titanium represented by the formula $TiS_x$ (wherein x is a positive real number) such as $Ti_2S_3$, $TiS_2$ and TiS, sulfides of vanadium represented by the formula $VS_x$ (wherein x is a positive real number) such as $V_3S_4$, $VS_2$ and VS, sulfides of iron represented by the formula $FeS_x$ (wherein x is a positive real number) such as $Fe_3S_4$, $FeS_2$ and FeS, sulfides of molybdenum represented by the formula $MoS_x$ (wherein x is a positive real number) such as $Mo_2S_3$ and $MoS_2$, sulfides of tin represented by the formula $SnS_x$ (wherein x is a positive real number) such as $SnS_2$ and SnS, sulfides of tungsten represented by the formula $WS_x$ (wherein x is a positive real number) such as WS2, sulfides of antimony represented by the formula $SbS_x$ (wherein x is a positive real number) such as $Sb_2S_3$, and sulfides of selenium represented by the formula $SeS_x$ (wherein x is a positive real number) such as $Se_5S_3$, $SeS_2$ and SeS.

Examples of nitrides that can be used as the negative electrode active material include lithium-containing nitrides such as $Li_3N$ and $Li_{3-x}A_xN$ (wherein A represents one or both of Ni and Co, and 0<x<3).

These carbon materials, oxides, sulfides and nitrides may be used individually, or a combination of two or more materials may be used. Further, these carbon materials, oxides, sulfides and nitrides may be either crystalline or amorphous.

Further, examples of metals that can be used as the negative electrode active material include lithium metal, silicon metal and tin metal.

Examples of alloys that can be used the negative electrode active material include lithium alloys such as Li-Al, Li-Ni, Li-Si, Li-Sn and Li-Sn-Ni; silicon alloys such as Si-Zn; tin alloys such as Sn-Mn, Sn-Co, Sn-Ni, Sn-Cu and Sn-La; and alloys such as $Cu_2Sb$ and $La_3Ni_2Sn_7$.

These metals and alloys are mainly used in standalone form as the electrode, for example following processing into a foil-like form.

Among the negative electrode active materials described above, for reasons including almost no change in the negative electrode potential when charging from an uncharged state to a fully charged state (favorable potential flatness), a low average discharge potential, and a superior capacity retention rate upon repeated charging and discharging (favorable cycle characteristic), carbon materials containing graphite such as natural graphite and artificial graphite as the main component can be used particularly favorably. The form of the carbon material may be, for example, any one of a flake-like form such as natural graphite, a spherical form such as mesocarbon microbeads, a fibrous form such as graphitized carbon fiber, or an aggregate of a fine powder.

The negative electrode mixture described above may also include a binder if necessary. Examples of the binder include thermoplastic resins, and specific examples include PVdF, thermoplastic polyimides, carboxymethyl cellulose, polyethylene and polypropylene.

(Negative Electrode Collector)

Examples of the negative electrode collector of the negative electrode include belt-like members formed using a metal material such as Cu, Ni or stainless steel as the forming material. Among the various possibilities, in terms of being resistant to alloy formation with lithium and having good processability, Cu is preferably used as the forming material, and is preferably processed into a thin film-like form.

An example of the method used for supporting the negative electrode mixture on this type of negative electrode collector include similar methods to those described for the positive electrode, including a method using press molding, and a method in which the negative electrode mixture is converted to a paste form using a solvent or the like, coated onto the negative electrode collector, dried, and then fixed by pressing.

(Separator)

Examples of materials that may be used as the separator of the lithium secondary battery include materials in the form of porous films, unwoven fabrics, or woven fabrics or the like composed of materials including polyolefin resins such as polyethylene and polypropylene, fluororesins, and nitrogen-containing aromatic polymers and the like. Further, the separator may be formed using two or more of these materials, or two or more materials may be laminated together to form the separator.

In one embodiment of the present invention, in order to ensure that the separator provides favorable permeation of the electrolyte during battery use (during charging and discharging), the air permeability determined by the Gurley method prescribed in JIS P 8117 is preferably at least 50 seconds/100cc but not more than 300 seconds/100cc, and is more preferably at least 50 seconds/100cc but not more than 200 seconds/100cc.

Further, the porosity of the separator, relative to the total volume of the separator, is preferably at least 30 vol% but not more than 80 vol%, and more preferably at least 40 vol% but not more than 70 vol%. The separator may also be formed by laminating separators having different porosities.

(Electrolyte Solution)

The electrolyte solution of the lithium secondary battery contains an electrolyte and an organic solvent.

Examples of the electrolyte contained in the electrolyte solution include lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (wherein BOB refers to bis(oxalato)borate), LiFSI (wherein FSI refers to bis(fluorosulfonyl)imide), lithium lower aliphatic carboxylates and $LiAlCl_4$, and mixtures of two or more of these salts may also be used. Among these, the use of an electrolyte containing at least one fluorine-containing salt selected from the group consisting of $LiPF_6$, $LiAsF_6$, $LiSbF_6$, $LiBF_4$, $LiCF_3SO_3$, $LiN(SO_2CF_3)_2$ and $LiC(SO_2CF_3)_3$ is preferable.

Further, examples of solvents that may be used as the organic solvent contained in the electrolyte solution include carbonates such as propylene carbonate, ethylene carbonate, dimethyl carbonate, diethyl carbonate, ethyl methyl carbonate, 4-trifluoromethyl-1,3-dioxolan-2-one and 1,2-di(methoxycarbonyloxy)ethane, ethers such as 1,2-dimethoxyethane, 1,3-dimethoxypropane, pentafluoropropyl methyl ether, 2,2,3,3-tetrafluoropropyl difluoromethyl ether, tetrahydrofuran and 2-methyltetrahydrofuran, esters such as methyl formate, methyl acetate and $\gamma$-butyrolactone, nitriles such as acetonitrile and butyronitrile, amides such as N,N-dimethylformamide and N,N-dimethylacetamide, carbamates such as 3-methyl-2-oxazolidone, sulfur-containing compounds such as sulfolane, dimethyl sulfoxide and 1,3-propane sultone, and solvents in which an additional fluoro group has been introduced into any of these organic solvents (compounds in which one or more hydrogen atoms of the organic solvent have each been substituted with a fluorine atom).

A mixture of two or more of these organic solvents is preferably used as the organic solvent. Among the various possibilities, a mixed solvent containing a carbonate is preferable, and mixed solvents containing a cyclic carbonate and an acyclic carbonate and mixed solvents containing a cyclic carbonate and an ether are more preferable. The mixed solvent of a cyclic carbonate and an acyclic carbonate is preferably a mixed solvent containing ethylene carbonate, dimethyl carbonate and ethyl methyl carbonate. An electrolyte solution that uses this type of mixed solvent has many advantages, including having a wide operating temperature range, being resistant to degradation even when charging and discharging are conducted at a high current rate, being resistant to degradation even when used over long periods, and being less likely to decompose even when a graphite material such as natural graphite or artificial graphite is used as the negative electrode active material.

Furthermore, the use of an electrolyte solution containing a lithium salt that contains fluorine such as $LiPF_6$ and an organic solvent having a fluorine substituent is preferable, as the safety of the obtained lithium secondary battery is improved. A mixed solvent containing dimethyl carbonate and an ether having a fluorine substituent such as pentafluoropropyl methyl ether or 2,2,3,3-tetrafluoropropyl difluoromethyl ether yields a superior capacity retention rate even when charging and discharging are conducted at a high current rate, and is consequently particularly preferable.

<All-Solid Lithium Secondary Battery>

Next, a positive electrode that uses a secondary battery positive electrode active material according to an aspect of the present invention as the positive electrode active material of an all-solid lithium secondary battery, and an all-solid lithium secondary battery having this positive electrode are described while describing the structure of the all-solid lithium secondary battery.

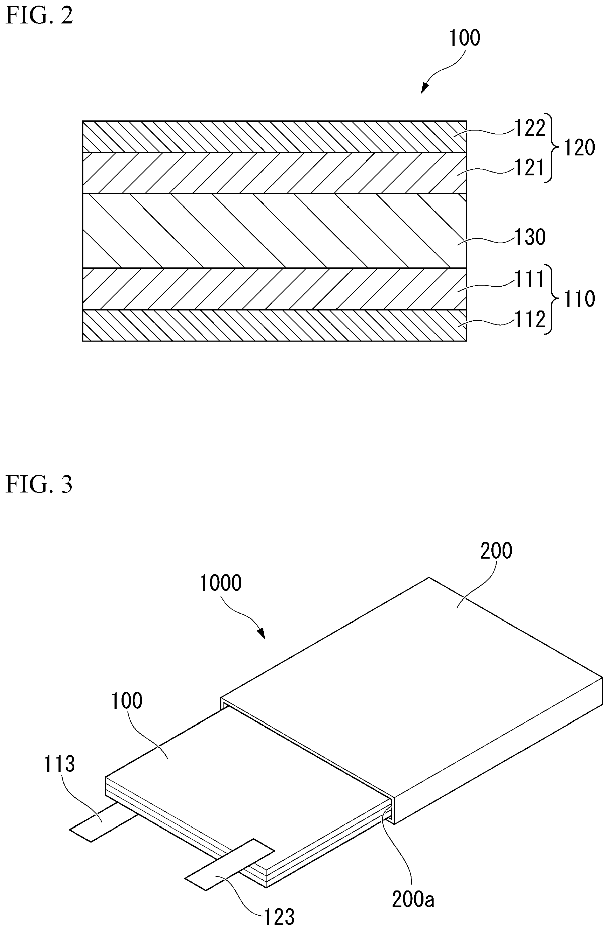

FIG. 2 and FIG. 3 are schematic diagrams illustrating one example of an all-solid lithium secondary battery of an embodiment of the present invention. The all-solid lithium secondary battery 1000 illustrated in FIG. 2 and FIG. 3 has a laminated body 100 having a positive electrode 110, a negative electrode 120 and a solid electrolyte layer 130, and an exterior casing 200 that houses the laminated body 100. The materials for forming each of these members are described below.

The laminated body 100 may have an external terminal 113 connected to a positive electrode collector 112, and an external terminal 123 connected to a negative electrode collector 122. In addition, the all-solid lithium secondary battery 1000 may have a separator provided between the positive electrode 110 and the negative electrode 120.

The all-solid lithium secondary battery 1000 also has an insulator, not shown in the drawing, which insulates the laminated body 100 and the exterior casing 200, and a sealing body, also not shown in the drawing, which seals the open portion 200a of the exterior casing 200.

The exterior casing 200 may use a container of a highly corrosion-resistant molded metal material such as aluminum, stainless steel or nickel-plated steel. Further, a container in which at least one surface has been covered in a corrosion-resistant laminate film may also be used as the exterior casing 200.

Examples of the shape of the all-solid lithium secondary battery 1000 include coin shapes, button shapes, paper (or sheet) shapes, cylindrical shapes, rectangular shapes, and laminated (or pouch) shapes.

The all-solid lithium secondary battery 1000 illustrated in the drawing is an example having one laminated body 100, but the embodiments of the present invention are not limited to this configuration. The all-solid lithium secondary battery 1000 may use the laminated body 100 as a unit cell, with a plurality of these unit cells (laminated bodies 100) sealed inside the exterior casing 200.

Each of the structural components is described below in order.

(Positive Electrode)

The positive electrode 110 in the present embodiment has a positive electrode active material layer 111 and a positive electrode collector 112.

The positive electrode active material layer 111 contains the positive electrode active material of one aspect of the present invention described above and a solid electrolyte. Further, the positive electrode active material layer 111 may contain a conductive material and a binder.

(Solid Electrolyte)

The solid electrolyte contained in the positive electrode active material layer 111 of the present embodiment may employ a solid electrode having lithium ion conductivity that is used in conventional solid-state batteries. Examples of these types of solid electrolyte include inorganic electrolytes and organic electrolytes. Examples of the inorganic electrolytes include oxide-based solid electrolytes, sulfide-based solid electrolytes and hydride-based solid electrolytes. Examples of the organic electrolytes include polymer-based solid electrolytes.

(Oxide-Based Solid Electrolytes)

Examples of oxide-based solid electrolytes include perovskite-type oxides, NASICON-type oxides, LISICON-type oxides, and garnet-type oxides.

Specific examples of the perovskite-type oxides include Li-La-Ti-based oxides such as $Li_aLa_{1-a}TiO_3$ (0<a<1), Li-La-Ta-based oxides such as $Li_bLa_{1-b}TaO_3$ (0<b<1), and Li-La-Nb-based oxides such as $Li_cLa_{1-c}NbO_3$ (0<c<1).

Specific examples of the NASICON-type oxides include $Li_{1+d}Al_dTi_{2-d}(PO_4)_3$ (0≤d≤1). NASICON-type oxides are oxides represented by the formula $Li_cM^1_fM^2_gP_hO_i$ (wherein $M^1$ represents one or more elements selected from the group consisting of B, Al, Ga, In, C, Si, Ge, Sn, Sb and Se; $M^2$ represents one or more elements selected from the group consisting of Ti, Zr, Ge, In, Ga, Sn and Al; and e, f, g, h and I each represent an arbitrary positive number.)

Specific examples of the LISICON-type oxides include oxides represented by the formula $Li_4M^3O_4-Li_3M^4O_4$ (wherein $M^3$ represents one or more elements selected from the group consisting of Si, Ge and Ti; and $M^4$ represents one or more elements selected from the group consisting of P, As and V.)

Specific examples of the garnet-type oxides include Li-La-Zr-based oxides such as $Li_7La_3Zr_2O_{12}$ (also referred to as LLZ).

The oxide-based solid electrolyte may be a crystalline material or an amorphous material.

(Sulfide-Based Solid Electrolytes)

Examples of sulfide-based solid electrolytes include $Li_2S-P_2S_5$-based compounds, $Li_2S-SiS_2$-based compounds, $Li_2S-GeS_2$-based compounds, $Li_2S-B_2S_3$-based compounds, $Li_2S-P_2S_3$-based compounds, $LiI-Si_2S-P_2S_5$, $LiI-Li_2S-P_2O_5$, $LiI-Li_3PO_4-P_2S_5$, and $Li_{10}GeP_2S_{12}$.

In this description, the expression "-based compound" indicating the sulfide-based solid electrolytes is a generic term used to describe solid electrolytes containing mainly the raw materials such as "$Li_2S$" or '$P_2S_5$" preceding the "-

based compound". For example, $Li_2S$-$P_2S_5$-based compounds include solid electrolytes containing mainly $Li_2S$ and $P_2S_5$, which may also contain other raw materials. The proportion of $Li_2S$ contained in one of these $Li_2S$-$P_2S_5$-based compounds is, for example, typically within a range from 50 to 90 mass% relative to the total mass of the $Li_2S$-$P_2S_5$-based compound. The proportion of $P_2S_5$ contained in these $Li_2S$-$P_2S_5$-based compounds is, for example, typically within a range from 10 to 50 mass% relative to the total mass of the $Li_2S$-$P_2S_5$-based compound. Further, the proportion of other raw materials contained in these $Li_2S$-$P_2S_5$-based compounds is, for example, typically within a range from 0 to 30 mass% relative to the total mass of the $Li_2S$-$P_2S_5$-based compound. Furthermore, $Li_2S$-$P_2S_5$-based compounds include solid electrolytes for which the mixing ratios of $Li_2S$ and $P_2S_5$ are different.

Specific examples of the $Li_2S$-$P_2S_5$-based compounds include $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-$Li_2O$, $Li_2S$-$P_2S_5$-$Li_2O$-LiI, and $Li_2S$-$P_2S_5$-$Z_mS_n$ (wherein m and n represents positive numbers, and Z is Ge, Zn or Ga).

Specific examples of the $Li_2S$-$SiS_2$-based compounds include $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$Li_3PO_4$, $Li_2S$-$SiS_2$-$Li_2SO_4$, and $Li_2S$-$SiS_2$-$Li_xMO_y$ (wherein x and y are positive numbers, and M is P, Si, Ge, B, Al, Ga or In).

Specific examples of the $Li_2S$-$GeS_2$-based compounds include $Li_2S$-$GeS_2$ and $Li_2S$-$GeS_2$-$P_2S_5$.

The sulfide-based solid electrolyte may be a crystalline material or an amorphous material.

(Hydride-Based Solid Electrolytes)

Examples of hydride-based solid electrolytes include $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, and $Li_4(BH_4)(NH_2)_3$.

(Polymer-Based Solid Electrolytes)

Examples of polymer-based solid electrolytes include organic polymer electrolytes such as polyethylene oxide-based polymer compounds, and polymer compounds containing at least one type of chain selected from the group consisting of polyorganosiloxane chains and polyoxyalkylene chains. Further, so-called gel-type electrolytes having a nonaqueous electrolyte solution supported on a polymer compound may also be used.

Combinations of two or more solid electrolytes may also be used, provided the effects of the invention are not impaired.

(Conductive Material)

At least one of a carbon material and a metal compound may be used as the conductive material of the positive electrode active material layer 111 of the present embodiment. Examples of the carbon material include graphite powder, carbon black (for example, acetylene black), and fibrous carbon materials. Carbon black has fine particles and a large surface area, and therefore the conductivity inside the positive electrode 110 can be enhanced by adding only an appropriate amount described below to the positive electrode active material layer 111, meaning the charge/discharge efficiency and the output characteristics can be improved. On the other hand, if too much carbon black is added, then the binding strength between the positive electrode active material layer 111 and the positive electrode collector 112 and the binding strength within the interior of the positive electrode active material layer 111 both tend to decrease, which may actually cause an increase in the internal resistance. Furthermore, examples of the metal compound include metals, metal alloys and metal oxides that have electrical conductivity.

In the case of a carbon material, the proportion of the conductive material in the positive electrode active material layer 111 is preferably at least 5 parts by mass but not more than 20 parts by mass per 100 parts by mass of the positive electrode active material. In those cases where a fibrous carbon material such as graphitized carbon fiber or carbon nanotubes is used as the conductive material, this proportion may be lowered.

(Binder)

In those cases where the positive electrode active material layer 111 has a binder, a thermoplastic resin may be used as the binder. Examples of this thermoplastic resin include polyimide-based resins; fluororesins such as polyvinylidene fluoride (hereinafter sometimes referred to as PVdF), polytetrafluoroethylene (hereinafter sometimes referred to as PTFE), tetrafluoroethylene-hexafluoropropylene-vinylidene fluoride-based copolymers, hexafluoropropylene-vinylidene fluoride-based copolymers and tetrafluoroethylene-perfluoro vinyl ether-based copolymers; and polyolefin resins such as polyethylene and polypropylene.

Mixtures of two or more of these thermoplastic resins may also be used. By using a fluororesin and a polyolefin resin as the binder, and setting the proportion of the fluororesin to at least 1 mass% but not more than 10 mass%, and the proportion of the polyolefin resin to at least 0.1 mass% but not more than 2 mass%, relative to the total mass of the positive electrode active material layer 111, a positive electrode active material layer 111 can be obtained that exhibits both superior binding strength between the positive electrode active material layer 111 and the positive electrode collector 112, and superior binding strength within the interior of the positive electrode active material layer 111.

(Positive Electrode Collector)

A belt-like member formed using a metal material such as Al, Ni or stainless steel as the forming material may be used as the positive electrode collector 112 of the positive electrode 110 of the present embodiment. Among the various possibilities, in terms of ease of processability and affordability, Al is preferably used as the forming material, and is preferably processed into a thin film-like form.

An example of the method used for supporting the positive electrode active material layer 111 on the positive electrode collector 112 is a method in which the positive electrode active material layer 111 is press-molded on top of the positive electrode collector 112. Either a cold press or a hot press may be used for the press molding.

Further, the positive electrode active material layer 111 may also be supported on the positive electrode collector 112 by converting a mixture of the positive electrode active material, the solid electrolyte, the conductive material and a binder to paste form using an organic solvent, thus forming a positive electrode mixture, subsequently coating and then drying the obtained positive electrode mixture on at least one surface of the positive electrode collector 112, and then fixing the mixture to the collector by pressing.

Furthermore, the positive electrode active material layer 111 may also be supported on the positive electrode collector 112 by converting a mixture of the positive electrode active material, the solid electrolyte, and the conductive material to paste form using an organic solvent, thus forming a positive electrode mixture, and then coating, drying, and sintering the obtained positive electrode mixture on at least one surface of the positive electrode collector 112.

Examples of organic solvents that can be used in the positive electrode mixture include amine-based solvents such as N,N-dimethylaminopropylamine and diethylenetriamine, ether-based solvents such as tetrahydrofuran, ketone-based solvents such as methyl ethyl ketone, ester-based solvents such as methyl acetate, and amide-based solvents such as dimethylacetamide and N-methyl-2-pyrrolidone (hereinafter sometimes referred to as NMP).

Examples of the method used for coating the positive electrode mixture onto the positive electrode collector 112 include slit die coating methods, screen coating methods, curtain coating methods, knife coating methods, gravure coating methods and electrostatic spray methods.

By using the methods described above, the positive electrode 110 can be produced.

(Negative Electrode)

The negative electrode 120 has a negative electrode active material layer 121 and a negative electrode collector 122. The negative electrode active material layer 121 contains a negative electrode active material. Further, the negative electrode active material layer 121 may also contain a solid electrolyte and a conductive material. The solid electrolyte, the conductive material and the binder may use the types of substances described above.

(Negative Electrode Active Material)

Examples of the negative electrode active material of the negative electrode active material layer 121 include carbon materials, chalcogen compounds (such as oxides and sulfides), nitrides, metals or alloys that can be doped and undoped with lithium ions at a lower potential than the positive electrode 110.

Examples of carbon materials that can be used as the negative electrode active material include graphite such as natural graphite or artificial graphite, coke, carbon black, pyrolytic carbon, carbon fiber, and fired organic polymer compounds.

Examples of oxides that can be used as the negative electrode active material include oxides of silicon represented by the formula $SiO_x$ (wherein x is a positive real number) such as $SiO_2$ and SiO, oxides of titanium represented by the formula $TiO_x$ (wherein x is a positive real number) such as $TiO_2$ and TiO, oxides of vanadium represented by the formula $VO_x$ (wherein x is a positive real number) such as $V_2O_5$ and $VO_2$, oxides of iron represented by the formula $FeO_x$ (wherein x is a positive real number) such as $Fe_3O_4$, $Fe_2O_3$ and FeO, oxides of tin represented by the formula $SnO_x$ (wherein x is a positive real number) such as $SnO_2$ and SnO, oxides of tungsten represented by the general formula $WO_x$ (wherein x is a positive real number) such as $WO_3$ and $WO_2$, and composite metal oxides containing lithium and titanium or vanadium such as $Li_4Ti_5O_{12}$ and $LiVO_2$.

Examples of sulfides that can be used as the negative electrode active material include sulfides of titanium represented by the formula $TiS_x$ (wherein x is a positive real number) such as $Ti_2S_3$, TiS2 and TiS, sulfides of vanadium represented by the formula $VS_x$ (wherein x is a positive real number) such as $V_3S_4$, $VS_2$ and VS, sulfides of iron represented by the formula $FeS_x$ (wherein x is a positive real number) such as $Fe_3S_4$, $FeS_2$ and FeS, sulfides of molybdenum represented by the formula $MoS_x$ (wherein x is a positive real number) such as $Mo_2S_3$ and $MoS_2$, sulfides of tin represented by the formula $SnS_x$ (wherein x is a positive real number) such as $SnS_2$ and SnS, sulfides of tungsten represented by the formula $WS_x$ (wherein x is a positive real number) such as $WS_2$, sulfides of antimony represented by the formula $SbS_x$ (wherein x is a positive real number) such as $Sb_2S_3$, and sulfides of selenium represented by the formula $SeS_x$ (wherein x is a positive real number) such as $Se_5S_3$, $SeS_2$ and SeS.

Examples of nitrides that can be used as the negative electrode active material include lithium-containing nitrides such as $Li_3N$ and $Li_{3-x}A_xN$ (wherein A represents one or both of Ni and Co, and 0<x<3).

These carbon materials, oxides, sulfides and nitrides may be used individually, or a combination of two or more materials may be used. Further, these carbon materials, oxides, sulfides and nitrides may be either crystalline or amorphous.

Further, examples of metals that can be used as the negative electrode active material include lithium metal, silicon metal and tin metal.

Examples of alloys that can be used the negative electrode active material include lithium alloys such as Li-Al, Li-Ni, Li-Si, Li-Sn and Li-Sn-Ni; silicon alloys such as Si-Zn; tin alloys such as Sn-Mn, Sn-Co, Sn-Ni, Sn-Cu and Sn-La; and alloys such as $Cu_2Sb$ and $La_3Ni_2Sn_7$.

These metals and alloys are mainly used in standalone form as the electrode, for example following processing into a foil-like form.

Among the negative electrode active materials described above, for reasons including almost no change in the potential of the negative electrode 120 when charging from an uncharged state to a fully charged state (namely, favorable potential flatness), a low average discharge potential, and a superior capacity retention rate upon repeated charging and discharging (namely, favorable cycle characteristic), carbon materials containing graphite such as natural graphite and artificial graphite as the main component can be used particularly favorably. The form of the carbon material may be, for example, any one of a flake-like form such as natural graphite, a spherical form such as mesocarbon microbeads, a fibrous form such as graphitized carbon fiber, or an aggregate of a fine powder.

Furthermore, among the negative electrode active materials described above, for reasons including high thermal stability and good resistance to dendrite formation caused by Li metal, oxides can be used particularly favorably. In terms of the form of the oxide, fibrous materials or aggregates of fine powders or the like can be used favorably.

(Negative Electrode Collector)

Examples of the negative electrode collector 122 of the negative electrode 120 include belt-like members formed using a metal material such as Cu, Ni or stainless steel as the forming material. Among the various possibilities, in terms of being resistant to alloy formation with lithium and having good processability, Cu is preferably used as the forming material, and is preferably processed into a thin film-like form.

Examples of the method used for supporting the negative electrode active material layer 121 on the negative electrode collector 122 include similar methods to those described for the positive electrode 110, including a method using press molding, a method in which a paste-like negative electrode mixture containing the negative electrode active material is coated, dried, and then pressed onto the negative electrode collector 122, and a method in which a paste-like negative electrode mixture containing the negative electrode active material is coated, dried, and then sintered on the negative electrode collector 122.

(Solid Electrolyte Layer)

The solid electrolyte layer 130 has a solid electrolyte described above.

The solid electrolyte layer 130 can be formed by using a sputtering method to deposit the inorganic solid electrolyte on the surface of the positive electrode active material layer 111 of the positive electrode 110 described above.

Further, the solid electrolyte layer 130 can also be formed by coating a paste-like mixture containing the solid electrolyte onto the surface of the positive electrode active material layer 111 of the positive electrode 110 described above, and then drying the paste-like mixture. Following drying, the solid electrolyte layer 130 may be formed by performing press molding, and then conducting further pressing by cold isostatic pressing (CIP).

As outlined above, the laminated body 100 can be produced by using a conventional method to laminate the negative electrode 120 to the solid electrolyte layer 130 provided on the positive electrode 110 so that the negative electrolyte layer 121 contacts the surface of the solid electrolyte layer 130.

Other aspects of the present invention include the following inventions.

[11] A lithium composite metal oxide powder having a layered structure, the lithium composite metal oxide powder containing at least Li, Ni, an element X and an element M, wherein the element X is at least one element selected from the group consisting of Co, Mn, Fe, Cu, Ti, Mg, Al, W, Mo, Nb, Zn, Sn, Zr, Ga and V, the element M is at least one element selected from the group consisting of B, Si, S and P, a ratio M/(Ni+X) which indicates the amount of the element M relative to the total amount of Ni and the element X is at least 0.5 mol% but not more than 2.5 mol%, the lithium composite metal oxide powder contains core particles and a coating substance that coats the surface of the core particles, the coating substance contains a compound produced by reaction of the element M and lithium, and a weight reduction percentage 1 when a thermogravimetric measurement is conducted under measurement conditions 1 described below is at least 0.05 wt% but not more than 0.15 wt%.

(Measurement Conditions 1)

Sample: 10 mg of the lithium composite metal oxide powder
Measurement atmosphere: open air (gas flow rate: 220 mL/minute)
Measurement conditions: the temperature is raised from 40°C to 600°C at a rate of temperature increase of 10°C/minute, and the weight of the sample is measured when the temperature reaches 500°C, and then again when the temperature reaches 600°C.

Calculation method: Weight reduction percentage 1 (wt%) = [(weight (g) when the lithium composite metal oxide powder has been heated to 500°C - weight (g) when the lithium composite metal oxide powder has been heated to 600°C) / weight of the lithium composite metal oxide powder used in the thermogravimetric measurement] × 100

[12] The lithium composite metal oxide powder according to [11], which satisfies a compositional formula (I) shown below.

$$Li[Li_m(Ni_{(1-n-p)}X_nM_p)_{1-m}]O_2 \, ... \qquad (I)$$

(wherein $0.01 \leq m \leq 0.06$, $0.1 \leq n \leq 0.5$, $0.005 \leq p \leq 0.025$, and $n+p < 1$)

[13] The lithium composite metal oxide powder according to [11] or [12], wherein a weight reduction percentage 2 when a thermogravimetric measurement is conducted under measurement conditions 2 described below is at least 0.01 wt% but not more than 0.12 wt%.

(Measurement Conditions 2)

Sample: 10 mg of the lithium composite metal oxide powder
Measurement atmosphere: open air (gas flow rate: 220 mL/minute)
Measurement conditions: the temperature is raised from 40°C to 400°C at a rate of temperature increase of 10°C/minute, and the weight of the sample is measured when the temperature reaches 250°C, and then again when the temperature reaches 400°C.
Calculation method: Weight reduction percentage 2 (wt%) = [(weight (g) when the lithium composite metal oxide powder has been heated to 250°C - weight (g) when the lithium composite metal oxide powder has been heated to 400°C) / weight of the lithium composite metal oxide powder used in the thermogravimetric measurement] × 100

[14] The lithium composite metal oxide powder according to any one of [1] to [13], having a BET specific surface area of at least 0.3 m²/g but not more than 1.5 m²/g.

[15] The lithium composite metal oxide powder according to any one of [11] to [14], having an average primary particle size of at least 0.1 $\mu$m but not more than 4 $\mu$m.

[16] The lithium composite metal oxide powder according to any one of [11] to [15], having a 50% cumulative volume particle size ($D_{50}$) determined by a particle size distribution measurement of at least 3 $\mu$m but not more than 6 $\mu$m.

[17] The lithium composite metal oxide powder according to any one of [11] to [17], wherein when a lithium secondary battery positive electrode having an electrode surface area of 1.65 cm$^2$ is formed in which the mass ratio between the lithium composite metal oxide powder, acetylene black and PVdF is lithium composite metal oxide powder : acetylene black : PVdF = 92:5:3, a coin battery R2032 is produced that contains this secondary battery positive electrode, a polyethylene porous film separator, an electrolyte solution prepared by dissolving 1.0 mol/l of LiPF$_6$ in a mixed solution containing ethylene carbonate, dimethyl carbonate and ethyl methyl carbonate in a ratio of 30:35:35 (volumetric ratio), and a discharge rate test is conducted in the following manner using the coin battery R2032 under the charge/discharge test conditions described below, the discharge rate characteristic obtained is within a range from 70 to 85%.

[18] A lithium secondary battery positive electrode active material comprising the lithium composite metal oxide powder according to any one of [11] to [17].

Additional aspects of the present invention include the following aspects.

[19] A lithium secondary battery positive electrode containing the lithium secondary battery positive electrode active material according to [18].

[20] A lithium secondary battery having the lithium secondary battery positive electrode according to [19].

EXAMPLES

Next, the present invention is described in further detail using a series of examples.

<Compositional Analysis>

Compositional analysis of the lithium composite metal oxide powders produced using the methods described below was conducted by dissolving the powder of each of the obtained lithium composite metal oxides in hydrochloric acid, and then performing an analysis using an inductively coupled plasma emission analyzer (SPS3000, manufactured by SII NanoTechnology Inc.).

<Transmission Electron Microscope - Electron Energy Loss Spectroscopy (TEM-EELS) Line Analysis>

The lithium composite metal oxide powder to be measured was converted to a thin film using a focused ion beam device (FIB), a particle cross-section was then observed using an analytical electron microscope (ARM 200F manufactured by JEOL Ltd.), and TEM-EELS line analysis was then conducted from the outermost particle surface toward the particle center using an EELS detector (Quantum ER manufactured by Gatan, Inc.), and confirmation was made as to whether or not a coating layer containing the element M had been formed on the surfaces of the core particles.

<Thermogravimetric Measurement of Lithium Composite Metal Oxide Powder: Measurement of Weight Reduction Percentage 1>

Each of the lithium composite metal oxide powders produced using the methods described below was measured under the following measurement conditions 1 to determine a weight reduction percentage 1.

(Measurement Conditions 1)

Sample: 10 mg of the lithium composite metal oxide powder
Measurement atmosphere: open air (gas flow rate: 220 mL/minute)
Measurement conditions: the temperature is raised from 40°C to 600°C at a rate of temperature increase of 10°C/minute, and the weight of the lithium composite metal oxide powder is measured when the temperature reaches 500°C, and then again when the temperature reaches 600°C.

$$\text{Calculation method: Weight reduction percentage 1 (wt\%)} = [(\text{weight (g) when}$$

the lithium composite metal oxide powder has been heated to 500°C - weight (g) when the lithium composite metal oxide powder has been heated to 600°C) / weight of the lithium composite metal oxide powder used in the thermogravimetric measurement] × 100

Weighing of the sample was conducted on the weighing beam of a simultaneous thermogravimetry and differential thermal analyzer (STA7300 manufactured by Hitachi High-Tech Science Corporation).

The sample was packed into a platinum measurement container, and the weights were measured using the simultaneous thermogravimetry and differential thermal analyzer under the measurement conditions described above. Subsequently, the weight reduction percentage 1 was determined using the calculation method described above.

<Thermogravimetric Measurement of Lithium Composite Metal Oxide Powder: Measurement of Weight Reduction Percentage 2>

Each of the lithium composite metal oxide powders produced using the methods described below was measured under the following measurement conditions 2 to determine a weight reduction percentage 2.

(Measurement Conditions 2)

Sample: 10 mg of the lithium composite metal oxide powder
Measurement atmosphere: open air (gas flow rate: 220 mL/minute)
Measurement conditions: the temperature is raised from 40°C to 600°C at a rate of temperature increase of 10°C/minute, and the weight of the lithium composite metal oxide powder is measured when the temperature reaches 250°C, and then again when the temperature reaches 400°C.
Calculation method: Weight reduction percentage 2 (wt%) = [(weight (g) when the lithium composite metal oxide powder has been heated to 250°C - weight (g) when the lithium composite metal oxide powder has been heated to 400°C) / weight of the lithium composite metal oxide powder used in the thermogravimetric measurement] × 100

Weighing of the sample was conducted on the weighing beam of a simultaneous thermogravimetry and differential thermal analyzer (STA7300 manufactured by Hitachi High-Tech Science Corporation).

The sample was packed into a platinum measurement container, and the weights were measured using the simultaneous thermogravimetry and differential thermal analyzer under the measurement conditions described above. Subsequently, the weight reduction percentage 2 was determined using the calculation method described above.

<BET Specific Surface Area Measurement>

Following drying of 1 g of the lithium metal composite oxide powder under a nitrogen atmosphere at 105°C for 30 minutes, the BET specific surface area was measured using a BET specific surface area meter (Macsorb (a registered trademark) manufactured by Mountech Co., Ltd.).

<Measurement of Average Primary Particle Size>

The lithium composite metal oxide powder was placed on a conductive sheet affixed to a sample stage, and using a scanning electron microscope (JSM-5510 manufactured by JEOL Ltd.), an electron beam with an accelerating voltage of 20 kV was irradiated onto the powder to conduct an SEM observation. Fifty primary particles were extracted randomly from the image (SEM photograph, 10,000×) obtained in the SEM observation, and for each primary particle, the distance (directed diameter) between parallel lines that sandwich the projected image of the primary particle between parallel lines drawn in a prescribed direction was measured as the particle size of the primary particle. The arithmetic mean of the obtained particle sizes of the primary particles was deemed the average primary particle size of the lithium composite metal oxide powder.

<Measurement of Particle Size Distribution of Lithium Composite Metal Oxide Powder>

First, 0.1 g of the lithium composite metal oxide powder to be measured was added to 50 ml of a 0.2 mass% aqueous solution of sodium hexametaphosphate, and the powder was dispersed to obtain a dispersion. The particle size distribution of the obtained dispersion was measured using a laser diffraction and scattering particle size distribution analyzer (Mastersizer 2000 manufactured by Malvern Instruments Ltd.), and a volume-based cumulative particle size distribution curve was obtained. In the obtained cumulative particle size distribution curve, the value for the particle size at the 50% cumulative point from the small particle side of the distribution was deemed the 50% cumulative volume particle size $D_{50}$ of the lithium composite metal oxide powder.

<Production of Lithium Secondary Battery Positive Electrode>

A lithium composite metal oxide obtained using the production method described below, a conductive material (acetylene black) and a binder (PVdF) were combined and kneaded in proportions that yielded a ratio of lithium composite metal oxide : conductive material: binder = 92:5:3 (mass ratio), thus preparing a paste-like positive electrode mixture. During preparation of the positive electrode mixture, N-methyl-2-pyrrolidone was used as the organic solvent.

The obtained positive electrode mixture was coated onto an Al foil of thickness 40 $\mu$m as the collector, and vacuum drying was then conducted at 150°C for 8 hours to obtain a lithium secondary battery positive electrode. The electrode surface area of this lithium secondary battery positive electrode was 1.65 cm$^2$.

<Production of Lithium Secondary Battery (Coin Half Cell)>

The operations described below were conducted in a glovebox under an argon atmosphere.

The lithium secondary battery positive electrode produced above in "Production of Lithium Secondary Battery Positive Electrode" was placed on the lower lid of the parts (manufactured by Hohsen Corporation) for a R2032 coin battery with the aluminum foil surface of the positive electrode facing downward, and a laminated film separator (having a heat-resistant porous layer (thickness: 16 $\mu$m) laminated on top of a polyethylene porous film) was placed on top of the positive electrode. Subsequently, 300 $\mu$L of an electrolyte solution was injected into the coin battery. The electrolyte solution that was used was prepared by dissolving 1.0 mol/L of LiPF$_6$ in a mixed solution containing ethylene carbonate, dimethyl carbonate and ethyl methyl carbonate in a ratio (volumetric ratio) of 30:35:35.

Next, using metallic lithium as the negative electrode, the negative electrode was placed on top of the laminated film separator, the top lid was installed via a gasket, and a crimping machine was used to crimp the structure to produce a lithium secondary battery (coin half cell R2032, hereinafter sometimes referred to as "the half cell").

- Discharge Rate Test

Using the half cell produced by the method described above, a discharge rate test was conducted under the conditions shown below, and the discharge rate characteristic in the discharge rate test was calculated.

<Charge/Discharge Test>

(The case where 1-n-p $\geq$ 0.8 in compositional formula (I))

Test temperature: 25°C
Charging maximum voltage: 4.35 V, Charging current: 1 CA, constant current and constant voltage charging
Discharge minimum voltage: 2.8 V, discharge current: 1 CA or 10 CA, constant current discharge

(The case where 1-n-p < 0.8 in compositional formula (I))

Test temperature: 25°C
Charging maximum voltage: 4.3 V, Charging current: 1 CA, constant current and constant voltage charging
Discharge minimum voltage: 2.5 V, discharge current: 1 CA or 10 CA, constant current discharge

<Calculation of Discharge Rate Characteristic>

Using the discharge capacity upon constant current discharge at 1 CA and the discharge capacity upon constant current discharge at 10 CA, the 10 CA / 1 CA discharge capacity ratio was determined using the formula shown below, and used as an indicator of the discharge rate characteristic. A higher value for the discharge rate characteristic means the lithium secondary battery exhibits higher output.

- Discharge Rate Characteristic

$$\text{Discharge rate characteristic } (\%) = \text{discharge capacity (mAh/g) at } 10\, \text{CA} / \text{discharge capacity (mAh/g) at } 1\, \text{CA} \times 100$$

- Cycle Characteristic

Using the half cell produced by the method described above, a charge/discharge test was conducted under the conditions shown below, and the cycle retention rate was calculated.

- Cycle Test Conditions

(The case where $1\text{-}n\text{-}p \geq 0.8$ in compositional formula (1))

Test temperature: 25°C
Charging maximum voltage: 4.35 V, Charging current: 0.5 CA, constant current and constant voltage charging
Discharge minimum voltage: 2.8 V, discharge current: 1 CA, constant current discharge

(The case where $1\text{-}n\text{-}p < 0.8$ in compositional formula (I))

Test temperature: 25°C
Charging maximum voltage: 4.2 V, Charging current: 0.5 CA, constant current and constant voltage charging
Discharge minimum voltage: 2.5 V, discharge current: 1 CA, constant current discharge

The discharge capacity during the first cycle was deemed the initial cycle discharge, the value of the discharge capacity of the 50th cycle divided by the initial cycle discharge capacity was calculated, and this value was deemed the cycle retention rate.

<<Example 1>>

1. Production of Lithium Composite Metal Oxide Precursor (Coprecipitate)

A reaction tank fitted with a stirrer and an overflow pipe was charged with water, an aqueous solution of sodium hydroxide was then added, and the liquid temperature was held at 70°C.
An aqueous solution of nickel sulfate, an aqueous solution of cobalt sulfate, an aqueous solution of manganese sulfate and an aqueous solution of zirconium sulfate were mixed together so as to achieve an atomic ratio between nickel atoms, cobalt atoms, manganese atoms and zirconium atoms of 59.7:19.9:19.9:0.5, thus preparing a mixed raw material solution.
Next, this mixed raw material solution and an aqueous solution of ammonium sulfate as a complexing agent were added continuously to the reaction tank under constant stirring. An aqueous solution of sodium hydroxide was added dropwise as appropriate to the reaction tank to adjust the pH of the solution in the reaction tank to 10.6, thus obtaining nickel-cobalt-manganese composite metal hydroxide particles, and following washing, the particles were dewatered, washed, dewatered again, isolated, and then dried, thus obtaining a hydroxide raw material powder 1. Compositional analysis of the obtained hydroxide raw material powder 1 revealed a molar ratio of Ni:Co:Mn = 0.60:0.20:0.20, and Zr/(Ni+Co+Mn) = 0.005.

2. Production and Evaluation of Lithium Composite Metal Oxide

The hydroxide raw material powder 1 and a weighed amount of lithium hydroxide that was sufficient to provide an amount (molar ratio) of Li of 1.04 relative to a value of 1 for the total amount of Ni, Co, Mn and Zr contained in the hydroxide raw material powder 1 were mixed together in a mortar to obtain a mixture.

The obtained mixture was then heated and held in an oxygen atmosphere at 650°C for 5 hours, and was then cooled to room temperature and crushed.

Subsequently, the mixture was heated and held in an oxygen atmosphere at 970°C for 5 hours, and then cooled to room temperature to obtain a raw material compound 1.

The thus obtained raw material compound 1 was crushed, and the obtained raw material compound powder 1 and a weighed amount of boric acid powder that was sufficient to provide an amount of B of 1 mol% relative to the total amount of Ni, Co, Mn and Zr contained in the raw material compound powder 1 were mixed together to obtain a boric acid mixture.

Next, the obtained boric acid mixture was subjected to a heat treatment in an open air atmosphere by holding at a temperature of 400°C for 5 hours, and the mixture was then cooled to room temperature and crushed, yielding a powdered lithium composite metal oxide 1.

The results of powder X-ray diffraction analysis of the thus obtained lithium composite metal oxide 1 confirmed that the lithium composite metal oxide 1 had a crystal structure with a layered structure.

The results of compositional analysis of the obtained lithium composite metal oxide 1 revealed that, in compositional formula (I) and compositional formula (I)-1, m=0.05, n=0.395, p=0.009, y=0.197, and z=0.198.

The results of TEM-EELS line analysis of a cross-section of the obtained lithium composite metal oxide 1 confirmed the formation of a coating layer containing boron on the surfaces of the core particles, and also confirmed that the coating layer contained compounds produced by the reaction of the element M and lithium.

3. Charge/Discharge Test for Non-Aqueous Electrolyte Secondary Battery

A coin battery was produced using the lithium composite metal oxide 1, and when a charge/discharge test was conducted, the discharge rate characteristic was 73.6% and the cycle retention rate was 93.7%.

<<Example 2>>

1. Production of Lithium Composite Metal Oxide Precursor (Coprecipitate)

The hydroxide raw material powder 1 obtained using the process of Example 1 was used.

2. Production and Evaluation of Lithium Composite Metal Oxide

The obtained hydroxide raw material powder 1 and a weighed amount of lithium hydroxide that was sufficient to provide an amount (molar ratio) of Li of 1.04 relative to a value of 1 for the total amount of Ni, Co, Mn and Zr contained in the hydroxide raw material powder 1 were mixed together in a mortar to obtain a mixture.

The obtained mixture was then heated and held in an oxygen atmosphere at 650°C for 5 hours, subsequently cooled to room temperature, and then crushed.

Subsequently, the mixture was heated and held in an oxygen atmosphere at 970°C for 5 hours, and then cooled to room temperature to obtain a raw material compound 2.

The thus obtained raw material compound 2 was crushed, and the obtained raw material compound powder 2 and a weighed amount of boric acid powder that was sufficient to provide an amount of B of 2 mol% relative to the total amount of Ni, Co, Mn and Zr contained in the raw material compound powder 2 were mixed together to obtain a mixture.

Next, the thus obtained boric acid mixture was subjected to a heat treatment in an open air atmosphere by holding at a temperature of 400°C for 5 hours, and the mixture was then cooled to room temperature and crushed, yielding a powdered lithium composite metal oxide 2.

The results of powder X-ray diffraction analysis of the thus obtained lithium composite metal oxide 2 confirmed that the lithium composite metal oxide 2 had a crystal structure with a layered structure.

The results of compositional analysis of the obtained lithium composite metal oxide 2 revealed that, in compositional formula (I) and compositional formula (I)-1, m=0.04, n=0.392, p=0.017, y=0.195, and z=0.197.

The results of TEM-EELS line analysis of a cross-section of the obtained lithium composite metal oxide 2 confirmed the formation of a coating layer containing boron on the surfaces of the core particles, and also confirmed that the coating layer contained compounds produced by the reaction of the element M and lithium.

3. Charge/Discharge Test for Non-Aqueous Electrolyte Secondary Battery

A coin battery was produced using the lithium composite metal oxide 2, and when a charge/discharge test was conducted, the discharge rate characteristic was 72.0% and the cycle retention rate was 96.2%.

<<Example 3>>

1. Production of Lithium Composite Metal Oxide Precursor (Coprecipitate)

A reaction tank fitted with a stirrer and an overflow pipe was charged with water, an aqueous solution of sodium hydroxide was then added, and the liquid temperature was held at 50°C.

An aqueous solution of nickel sulfate, an aqueous solution of cobalt sulfate, an aqueous solution of manganese sulfate and an aqueous solution of zirconium sulfate were mixed together so as to achieve an atomic ratio between nickel atoms, cobalt atoms, manganese atoms and zirconium atoms of 59.7:19.9:19.9:0.5, thus preparing a mixed raw material solution.

Next, this mixed raw material solution and an aqueous solution of ammonium sulfate as a complexing agent were added continuously to the reaction tank under constant stirring. An aqueous solution of sodium hydroxide was added dropwise as appropriate to the reaction tank to adjust the pH of the solution in the reaction tank to 11.9, thus obtaining nickel-cobalt-manganese composite metal hydroxide particles, and following washing, the particles were dewatered, washed, dewatered again, isolated, and then dried, thus obtaining a hydroxide raw material powder 2. Compositional analysis of the obtained hydroxide raw material powder 2 revealed a molar ratio of Ni:Co:Mn = 0.60:0.20:0.20, and Zr/(Ni+Co+Mn) = 0.005.

2. Production and Evaluation of Lithium Composite Metal Oxide

The obtained hydroxide raw material powder 2 and a weighed amount of lithium hydroxide that was sufficient to provide an amount (molar ratio) of Li of 1.05 relative to a value of 1 for the total amount of Ni, Co, Mn and Zr contained in the hydroxide raw material powder 2 were mixed together in a mortar to obtain a mixture.

The obtained mixture was then heated and held in an oxygen atmosphere at 650°C for 5 hours, and was then cooled to room temperature and crushed.

Subsequently, the mixture was heated and held in an oxygen atmosphere at 970°C for 5 hours, and then cooled to room temperature to obtain a raw material compound 3.

The thus obtained raw material compound 3 was crushed, and the obtained raw material compound powder 3 and a weighed amount of boric acid powder that was sufficient to provide an amount of B of 2 mol% relative to the total amount of Ni, Co, Mn and Zr contained in the raw material compound powder 3 were mixed together to obtain a boric acid mixture.

Next, the obtained boric acid mixture was subjected to a heat treatment in an open air atmosphere by holding at a temperature of 500°C for 5 hours, and the mixture was then cooled to room temperature and crushed, yielding a powdered lithium composite metal oxide 3.

The results of powder X-ray diffraction analysis of the thus obtained lithium composite metal oxide 3 confirmed that the lithium composite metal oxide 3 had a crystal structure with a layered structure.

The results of compositional analysis of the obtained lithium composite metal oxide 3 revealed that, in compositional formula (I) and compositional formula (I)-1, m=0.03, n=0.391, p=0.015, y=0.196, and z=0.196.

The results of TEM-EELS line analysis of a cross-section of the obtained lithium composite metal oxide 3 confirmed the formation of a coating layer containing boron on the surfaces of the core particles, and also confirmed that the coating layer contained compounds produced by the reaction of the element M and lithium.

3. Charge/Discharge Test for Non-Aqueous Electrolyte Secondary Battery

A coin battery was produced using the lithium composite metal oxide 3, and when a charge/discharge test was conducted, the discharge rate characteristic was 73.2% and the cycle retention rate was 95.0%.

<<Example 4>>

1. Production of Lithium Composite Metal Oxide Precursor (Coprecipitate)

A reaction tank fitted with a stirrer and an overflow pipe was charged with water, an aqueous solution of sodium hydroxide was then added, and the liquid temperature was held at 50°C.

An aqueous solution of nickel sulfate, an aqueous solution of cobalt sulfate, and an aqueous solution of manganese sulfate were mixed together so as to achieve an atomic ratio between nickel atoms, cobalt atoms and manganese atoms of 91:7:2, thus preparing a mixed raw material solution.

Next, this mixed raw material solution and an aqueous solution of ammonium sulfate as a complexing agent were added continuously to the reaction tank under constant stirring. An aqueous solution of sodium hydroxide was added dropwise as appropriate to the reaction tank to adjust the pH of the solution in the reaction tank to 12.5, thus obtaining nickel-cobalt-manganese composite metal hydroxide particles, and following washing, the particles were dewatered, washed, dewatered again, isolated, and then dried, thus obtaining a hydroxide raw material powder 3. Compositional analysis of the obtained hydroxide raw material powder 1 revealed a molar ratio of Ni:Co:Mn = 0.91:0.07:0.02.

2. Production and Evaluation of Lithium Composite Metal Oxide

The obtained hydroxide raw material powder 3, a weighed amount of lithium hydroxide that was sufficient to provide an amount (molar ratio) of Li of 1.10 relative to a value of 1 for the total amount of Ni, Co and Mn contained in the hydroxide raw material powder 3, and a weighed amount of potassium sulfate as an inert flux that was sufficient to provide an amount (molar ratio) of potassium sulfate of 0.1 relative to the combined amount of lithium hydroxide and the potassium sulfate, were mixed together in a mortar to obtain a mixture.

The obtained mixture was then heated and held in an oxygen atmosphere at 775°C for 10 hours, and was then cooled to room temperature to obtain a raw material compound 4.

The obtained raw material compound 4 was crushed, dispersed in 5°C pure water, and then dewatered. The powder was then washed using pure water that had been adjusted to a liquid temperature of 5°C, dewatered, and subsequently dried by heating at 80°C for 15 hours, and then at 150°C for 9 hours.

The thus obtained raw material compound 4 was crushed, and the obtained raw material compound powder 4 and a weighed amount of boric acid powder that was sufficient to provide an amount of B of 2 mol% relative to the total amount of Ni, Co and Mn contained in the raw material compound powder 4 were mixed together to obtain a boric acid mixture.

Next, the obtained boric acid mixture was subjected to a heat treatment in an oxygen atmosphere by holding at a temperature of 300°C for 5 hours, and the mixture was then cooled to room temperature and crushed, yielding a powdered lithium composite metal oxide 4.

The results of powder X-ray diffraction analysis of the thus obtained lithium composite metal oxide 4 confirmed that the lithium composite metal oxide 4 had a crystal structure with a layered structure.

The results of compositional analysis of the obtained lithium composite metal oxide 4 revealed that, in compositional formula (I) and compositional formula (I)-1, $m=0.04$, $n=0.091$, $p=0.009$, $y=0.069$, and $z=0.022$.

The results of TEM-EELS line analysis of a cross-section of the obtained lithium composite metal oxide 4 confirmed the formation of a coating layer containing boron on the surfaces of the core particles, and also confirmed that the coating layer contained compounds produced by the reaction of the element M and lithium.

3. Charge/Discharge Test for Non-Aqueous Electrolyte Secondary Battery

A coin battery was produced using the lithium composite metal oxide 4, and when a charge/discharge test was conducted, the discharge rate characteristic was 48.4% and the cycle retention rate was 85.4%.

<<Comparative Example 1>>

1. Production of Lithium Composite Metal Oxide Precursor (Coprecipitate)

The hydroxide raw material powder 1 obtained using the process of Example 1 was used.

2. Production and Evaluation of Lithium Composite Metal Oxide

The obtained hydroxide raw material powder 1 and a weighed amount of lithium hydroxide that was sufficient to provide an amount (molar ratio) of Li of 1.04 relative to a value of 1 for the total amount of Ni, Co, Mn and Zr contained in the hydroxide raw material powder 1 were mixed together in a mortar to obtain a mixture.

The obtained mixture was then heated and held in an oxygen atmosphere at 650°C for 5 hours, subsequently cooled to room temperature, and then crushed.

Subsequently, the mixture was heated and held in an oxygen atmosphere at 950°C for 5 hours, and then cooled to room temperature to obtain a raw material compound 5.

The thus obtained raw material compound 5 was crushed, and the obtained raw material compound powder 5 and a weighed amount of boric acid powder that was sufficient to provide an amount of B of 2 mol% relative to the total amount of Ni, Co, Mn and Zr contained in the raw material compound powder 5 were mixed together to obtain a boric acid mixture.

Next, the thus obtained boric acid mixture was subjected to a heat treatment in an open air atmosphere by holding at a temperature of 200°C for 5 hours, and the mixture was then cooled to room temperature and crushed, yielding a powdered lithium composite metal oxide 5.

The results of powder X-ray diffraction analysis of the thus obtained lithium composite metal oxide 5 confirmed that the lithium composite metal oxide 5 had a crystal structure with a layered structure.

The results of compositional analysis of the obtained lithium composite metal oxide 5 revealed that, in compositional formula (I) and compositional formula (I)-1, m=0.03, n=0.389, p=0.016, y=0.194, and z=0.195.

The results of TEM-EELS line analysis of a cross-section of the obtained lithium composite metal oxide 5 confirmed the formation of a coating layer containing boron on the surfaces of the core particles, and also confirmed that the coating layer contained compounds produced by the reaction of the element M and lithium.

3. Charge/Discharge Test for Non-Aqueous Electrolyte Secondary Battery

A coin battery was produced using the lithium composite metal oxide 5, and when a charge/discharge test was conducted, the discharge rate characteristic was 59.6% and the cycle retention rate was 96.6%.

<<Comparative Example 2>>

1. Production of Lithium Composite Metal Oxide Precursor (Coprecipitate)

The hydroxide raw material powder 1 obtained using the process of Example 1 was used.

2. Production and Evaluation of Lithium Composite Metal Oxide

The obtained hydroxide raw material powder 1 and a weighed amount of lithium hydroxide that was sufficient to provide an amount (molar ratio) of Li of 1.04 relative to a value of 1 for the total amount of Ni, Co, Mn and Zr contained in the hydroxide raw material powder 1 were mixed together in a mortar to obtain a mixture.

The obtained mixture was then heated and held in an oxygen atmosphere at 650°C for 5 hours, subsequently cooled to room temperature, and then crushed.

Subsequently, the mixture was heated and held in an oxygen atmosphere at 950°C for 5 hours, and then cooled to room temperature to obtain a raw material compound 6.

The thus obtained raw material compound 6 was crushed, and the obtained raw material compound powder 6 and a weighed amount of boric acid powder that was sufficient to provide an amount of B of 3 mol% relative to the total amount of Ni, Co, Mn and Zr contained in the raw material compound powder 6 were mixed together to obtain a boric acid mixture.

Next, the thus obtained boric acid mixture was subjected to a heat treatment in an open air atmosphere by holding at a temperature of 400°C for 5 hours, and the mixture was then cooled to room temperature and crushed, yielding a powdered lithium composite metal oxide 6.

The results of powder X-ray diffraction analysis of the thus obtained lithium composite metal oxide 6 confirmed that the lithium composite metal oxide 6 had a crystal structure with a layered structure.

The results of compositional analysis of the obtained lithium composite metal oxide 6 revealed that, in compositional formula (I) and compositional formula (I)-1, m=0.05, n=0.387, p=0.029, y=0.192, and z=0.194.

The results of TEM-EELS line analysis of a cross-section of the obtained lithium composite metal oxide 6 confirmed the formation of a coating layer containing boron on the surfaces of the core particles, and also confirmed that the coating layer contained compounds produced by the reaction of the element M and lithium.

3. Charge/Discharge Test for Non-Aqueous Electrolyte Secondary Battery

A coin battery was produced using the lithium composite metal oxide 6, and when a charge/discharge test was conducted, the discharge rate characteristic was 53.4% and the cycle retention rate was 90.5%.

«Comparative Example 3>>

1. Production of Lithium Composite Metal Oxide Precursor (Coprecipitate)

The hydroxide raw material powder 1 obtained using the process of Example 1 was used.

2. Production and Evaluation of Lithium Composite Metal Oxide

The obtained hydroxide raw material powder 1 and a weighed amount of lithium hydroxide that was sufficient to provide an amount (molar ratio) of Li of 1.04 relative to a value of 1 for the total amount of Ni, Co, Mn and Zr contained in the hydroxide raw material powder 1 were mixed together in a mortar to obtain a mixture.

The obtained mixture was then heated and held in an oxygen atmosphere at 650°C for 5 hours, subsequently cooled to room temperature, and then crushed.

Subsequently, the mixture was heated and held in an oxygen atmosphere at 950°C for 5 hours, and then cooled to room temperature to obtain a raw material compound 7.

The thus obtained raw material compound 7 was crushed, and the obtained raw material compound powder 7 and a weighed amount of boric acid powder that was sufficient to provide an amount of B of 5 mol% relative to the total amount of Ni, Co, Mn and Zr contained in the raw material compound powder 7 were mixed together to obtain a boric acid mixture.

Next, the thus obtained boric acid mixture was subjected to a heat treatment in an open air atmosphere by holding at a temperature of 400°C for 5 hours, and the mixture was then cooled to room temperature and crushed, yielding a powdered lithium composite metal oxide 7.

The results of powder X-ray diffraction analysis of the thus obtained lithium composite metal oxide 7 confirmed that the lithium composite metal oxide 7 had a crystal structure with a layered structure.

The results of compositional analysis of the obtained lithium composite metal oxide 7 revealed that, in compositional formula (I) and compositional formula (I)-1, m=0.05, n=0.380, p=0.044, y=0.189, and z=0.191.

The results of TEM-EELS line analysis of a cross-section of the obtained lithium composite metal oxide 7 confirmed the formation of a coating layer containing boron on the surfaces of the core particles, and also confirmed that the coating layer contained compounds produced by the reaction of the element M and lithium.

3. Charge/Discharge Test for Non-Aqueous Electrolyte Secondary Battery

A coin battery was produced using the lithium composite metal oxide 7, and when a charge/discharge test was conducted, the discharge rate characteristic was 43.6% and the cycle retention rate was 86.1%.

<<Comparative Example 4>>

1. Production of Lithium Composite Metal Oxide Precursor (Coprecipitate)

The hydroxide raw material powder 1 obtained using the process of Example 1 was used.

2. Production and Evaluation of Lithium Composite Metal Oxide

The obtained hydroxide raw material powder 1 and a weighed amount of lithium hydroxide that was sufficient to provide an amount (molar ratio) of Li of 1.04 relative to a value of 1 for the total amount of Ni, Co, Mn and Zr contained in the hydroxide raw material powder 1 were mixed together in a mortar to obtain a mixture.

The obtained mixture was then heated and held in an oxygen atmosphere at 650°C for 5 hours, subsequently cooled to room temperature, and then crushed.

Subsequently, the mixture was heated and held in an oxygen atmosphere at 950°C for 5 hours, and then cooled to room temperature to obtain a raw material compound 8.

The thus obtained raw material compound 8 was then crushed, yielding a powdered lithium composite metal oxide 8.

The results of powder X-ray diffraction analysis of the thus obtained lithium composite metal oxide 8 confirmed that the lithium composite metal oxide 8 had a crystal structure with a layered structure.

The results of compositional analysis of the obtained lithium composite metal oxide 8 revealed that, in compositional formula (I) and compositional formula (I)-1, m=0.05, n=0.396, p=0, y=0.197, and z=0.200.

The results of TEM-EELS line analysis of a cross-section of the obtained lithium composite metal oxide 8 confirmed no coating layer on the surfaces of the core particles.

3. Charge/Discharge Test for Non-Aqueous Electrolyte Secondary Battery

A coin battery was produced using the lithium composite metal oxide 8, and when a charge/discharge test was conducted, the discharge rate characteristic was 64.8% and the cycle retention rate was 90.6%.

<<Comparative Example 5>>

1. Production of Lithium Composite Metal Oxide Precursor (Coprecipitate)

The hydroxide raw material powder 3 obtained using the process of Example 4 was used.

2. Production and Evaluation of Lithium Composite Metal Oxide

The obtained hydroxide raw material powder 3, a weighed amount of lithium hydroxide that was sufficient to provide an amount (molar ratio) of Li of 1.10 relative to a value of 1 for the total amount of Ni, Co and Mn contained in the hydroxide raw material powder 3, and a weighed amount of potassium sulfate as an inert flux that was sufficient to provide an amount (molar ratio) of potassium sulfate of 0.1 relative to the combined amount of lithium hydroxide and the potassium sulfate, were mixed together in a mortar to obtain a mixture.
The obtained mixture was then heated and held in an oxygen atmosphere at 775°C for 10 hours, and was then cooled to room temperature to obtain a raw material compound.
The obtained raw material compound was crushed, dispersed in 5°C pure water, and then dewatered. The powder was then washed using pure water that had been adjusted to a liquid temperature of 5°C, dewatered, and subsequently dried by heating at 80°C for 15 hours, and then at 150°C for 9 hours, thus obtaining a powdered lithium composite metal oxide 9.
The results of powder X-ray diffraction analysis of the thus obtained lithium composite metal oxide 9 confirmed that the lithium composite metal oxide 9 had a crystal structure with a layered structure.
The results of compositional analysis of the obtained lithium composite metal oxide 9 revealed that, in compositional formula (I) and compositional formula (I)-1, m=0.03, n=0.087, p=0, y=0.067, and z=0.020.
The results of TEM-EELS line analysis of a cross-section of the obtained lithium composite metal oxide 9 confirmed no coating layer on the surfaces of the core particles.

3. Charge/Discharge Test for Non-Aqueous Electrolyte Secondary Battery

A coin battery was produced using the lithium composite metal oxide 9, and when a charge/discharge test was conducted, the discharge rate characteristic was 33.4% and the cycle retention rate was 80.0%.
Table 1 displays the composition determined from compositional analysis, the type and amount of the element M determined from compositional analysis, the weight reduction percentage 1, the weight reduction percentage 2, the BET specific surface area determined from the BET specific surface area measurement, the average primary particle size determined from SEM observation, and the 50% cumulative volume particle size ($D_{50}$) determined from the particle size distribution measurement, for each of the lithium composite metal oxides obtained in Examples 1 to 3 and Comparative Examples 1 to 4, and also displays the discharge rate characteristic and the cycle retention rate determined by charge/discharge testing using the positive electrode active material obtained in each of Examples 1 to 3 and Comparative Examples 1 to 4.

[Table 1]

| | Compositional formula (I) | | | Compositional formula (I)-1 | | Type of Element M | Amount of element M M/(Ni+X) mol% | Weight reduction percentage 1 wt% | Weight reduction percentage 2 wt% | BET m²/g | Primary particle size μm | $D_{50}$ μm | Rate 10C/1C % | Retention rate 50th/1st % |
|---|---|---|---|---|---|---|---|---|---|---|---|---|---|---|
| | m | n | p | y | z | | | | | | | | | |
| Example 1 | 0.05 | 0.395 | 0.009 | 0.197 | 0.198 | B | 0.92 | 0.081 | 0.015 | 0.57 | 3.0 | 5.4 | 73.6 | 93.7 |
| Example 2 | 0.04 | 0.392 | 0.017 | 0.195 | 0.197 | B | 1.68 | 0.105 | 0.031 | 0.51 | 3.3 | 5.4 | 72.0 | 96.2 |
| Example 3 | 0.03 | 0.391 | 0.015 | 0.196 | 0.196 | B | 1.55 | 0.111 | 0.115 | 0.60 | 3.2 | 5.1 | 73.2 | 95.0 |
| Comparative Example 1 | 0.03 | 0.389 | 0.016 | 0.194 | 0.195 | B | 1.67 | 0.153 | 0.121 | 0.57 | 2.8 | 4.6 | 59.6 | 96.6 |
| Comparative Example 2 | 0.05 | 0.387 | 0.029 | 0.192 | 0.194 | B | 2.98 | 0.185 | 0.055 | 0.58 | 2.4 | 4.3 | 53.4 | 90.5 |
| Comparative Example 3 | 0.05 | 0.380 | 0.044 | 0.189 | 0.191 | B | 4.65 | 0.296 | 0.006 | 0.57 | 2.2 | 4.1 | 43.6 | 86.1 |
| Comparative Example 4 | 0.05 | 0.396 | 0 | 0.197 | 0.200 | - | 0 | 0.011 | 0.057 | 0.77 | 2.7 | 4.1 | 64.8 | 90.6 |

Table 2 displays the composition determined from compositional analysis, the type and amount of the element M determined from compositional analysis, the weight reduction percentage 1, the weight reduction percentage 2, the BET specific surface area determined from the BET specific surface area measurement, the average primary particle size determined from SEM observation, and the 50% cumulative volume particle size ($D_{50}$) determined from the particle size distribution measurement, for each of the lithium composite metal oxides obtained in Example 4 and Comparative Example 5, and also displays the discharge rate characteristic and the cycle retention rate determined by charge/discharge testing using the positive electrode active material obtained in each of Example 4 and Comparative Example 5.

[Table 2]

| | Compositional formula (I) | | | Compositional formula (I)-1 | | Type of Element M | Amount of element M M/(Ni+X) mol% | Weight reduction percentage 1 wt% | Weight reduction percentage 2 wt% | BET m²/g | Primary particle size μm | $D_{50}$ μm | Rate 10C/1C % | Retention rate 50th/1st % |
|---|---|---|---|---|---|---|---|---|---|---|---|---|---|---|
| | m | n | p | y | z | | | | | | | | | |
| Example 4 | 0.04 | 0.091 | 0.009 | 0.069 | 0.022 | B | 0.90 | 0.053 | 0.090 | 1.07 | 1.0 | 3.0 | 48.4 | 85.4 |
| Comparative Example 5 | 0.03 | 0.087 | 0 | 0.067 | 0.020 | - | 0 | 0.004 | 0.224 | 0.92 | 1.0 | 3.0 | 33.4 | 80.0 |

As illustrated in Table 1, comparison of Examples 1 and 3 with Comparative Example 4 reveals that Examples 1 to 3 which contained added boron as the element M exhibited a superior cycle characteristic and rate characteristic to Comparative Example 4 which contained no added boron.

Comparison of Examples 1 to 3 with Comparative Examples 1 to 3 reveals that Examples 1 to 3 which exhibited weight reduction percentages that satisfied embodiments of the present invention had both a better discharge rate characteristic and a better cycle retention rate than Comparative Examples 1 to 3.

As illustrated in Table 2, Example 4 exhibited a more favorable discharge rate characteristic and cycle retention rate than Comparative Example 5.

INDUSTRIAL APPLICABILITY

By using the present invention, a lithium composite metal oxide powder that exhibits a superior discharge rate characteristic and cycle characteristic when used as a lithium secondary battery positive electrode active material, and a lithium secondary battery positive electrode active material can be provided.

DESCRIPTION OF REFERENCE SIGNS

1:      Separator
2:      Positive electrode
3:      Negative electrode
4:      Electrode group
5:      Battery can
6:      Electrolyte solution
7:      Top insulator
8:      Sealing body
10:     Lithium secondary battery
21:     Positive electrode lead
31:     Negative electrode lead

**Claims**

1. A lithium composite metal oxide powder having a layered structure,

   the lithium composite metal oxide powder containing at least Li, Ni, an element X and an element M, wherein the element X is at least one element selected from the group consisting of Co, Mn, Fe, Cu, Ti, Mg, Al, W, Mo, Nb, Zn, Sn, Zr, Ga and V,
   the element M is at least one element selected from the group consisting of B, Si, S and P,
   a ratio M/(Ni+X) which indicates an amount of the element M relative to a total amount of Ni and the element X exceeds 0 mol% but is not more than 5 mol%,
   the lithium composite metal oxide powder comprises core particles and a coating substance that coats surfaces of the core particles, wherein the coating substance contains a compound produced by reaction of the element M and lithium, and
   a weight reduction percentage 1 when a thermogravimetric measurement is conducted under measurement conditions 1 described below is not more than 0.15 wt%. (Measurement Conditions 1)
   Sample: 10 mg of the lithium composite metal oxide powder
   Measurement atmosphere: open air (gas flow rate: 220 mL/minute)
   Measurement conditions: a temperature is raised from 40°C to 600°C at a rate of temperature increase of 10°C/minute, and a weight of the sample is measured when the temperature reaches 500°C, and then again when the temperature reaches 600°C.

Calculation method: Weight reduction percentage 1 (wt%) = [(weight (g) when the lithium composite metal oxide powder has been heated to 500°C - weight (g) when the lithium composite metal oxide powder has been heated to 600°C) / weight of the lithium composite metal oxide powder used in the thermogravimetric measurement] × 100

2. The lithium composite metal oxide powder according to Claim 1, which satisfies a compositional formula (I) shown below:

$$Li[Li_m(Ni_{(1-n-p)}X_nM_p)_{1-m}]O_2 \dots \qquad (I)$$

wherein $-0.1 \leq m \leq 0.2$, $0 < n \leq 0.8$, $0 < p \leq 0.05$, and $n+p < 1$.

3. The lithium composite metal oxide powder according to Claim 2, wherein m in the compositional formula (1) satisfies $0 < m \leq 0.2$.

4. The lithium composite metal oxide powder according to any one of Claims 1 to 3, wherein a weight reduction percentage 2 when a thermogravimetric measurement is conducted under measurement conditions 2 described below is not more than 0.12 wt%. (Measurement Conditions 2)

   Sample: 10 mg of the lithium composite metal oxide powder
   Measurement atmosphere: open air (gas flow rate: 220 mL/minute)
   Measurement conditions: a temperature is raised from 40°C to 400°C at a rate of temperature increase of 10°C/minute, and a weight of the sample is measured when the temperature reaches 250°C, and then again when the temperature reaches 400°C.

Calculation method: Weight reduction percentage 2 (wt%) = [(weight (g) when the lithium composite metal oxide powder has been heated to 250°C - weight (g) when the lithium composite metal oxide powder has been heated to 400°C) / weight of the lithium composite metal oxide powder used in the thermogravimetric measurement] × 100

5. The lithium composite metal oxide powder according to any one of Claims 1 to 4, having a BET specific surface area of at least 0.1 $m^2/g$ but not more than 3 $m^2/g$.

6. The lithium composite metal oxide powder according to any one of Claims 1 to 5, having an average primary particle size of at least 0.1 $\mu m$ but not more than 10 $\mu m$.

7. The lithium composite metal oxide powder according to any one of Claims 1 to 6, having a 50% cumulative volume particle size ($D_{50}$) determined by a particle size distribution measurement of at least 1 $\mu m$ but not more than 10 $\mu m$.

8. A lithium secondary battery positive electrode active material comprising the lithium composite metal oxide powder according to any one of Claims 1 to 7.

FIG. 1A

FIG. 1B

FIG. 2

FIG. 3

## INTERNATIONAL SEARCH REPORT

| International application No. |
| --- |
| PCT/JP2019/049995 |

### A. CLASSIFICATION OF SUBJECT MATTER

Int. Cl. C01G53/00(2006.01)i, H01M4/36(2006.01)i, H01M4/505(2010.01)i, H01M4/525(2010.01)i
FI: C01G53/00 A, H01M4/525, H01M4/36 C, H01M4/505

According to International Patent Classification (IPC) or to both national classification and IPC

### B. FIELDS SEARCHED

Minimum documentation searched (classification system followed by classification symbols)
Int. Cl. G01G53/00, H01M4/36, H01M4/505, H01M4/525

Documentation searched other than minimum documentation to the extent that such documents are included in the fields searched

Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2016-033854 A (NICHIA CHEMICAL INDUSTRIES, LTD.) 10 March 2016, entire text | 1-8 |
| A | JP 2018-172257 A (SUMITOMO CHEMICAL CO., LTD.) 08 November 2018, entire text | 1-8 |
| A | JP 2018-098161 A (NIPPON STEEL & SUMITOMO METAL CORP.) 21 June 2018, entire text | 1-8 |
| A | JP 2016-012500 A (PANASONIC CORP.) 21 January 2016, entire text | 1-8 |
| E, X | JP 6630865 B1 (SUMITOMO CHEMICAL CO., LTD.) 15 January 2020, claims, paragraphs [0146]-[0219] | 1-8 |

| ☐ Further documents are listed in the continuation of Box C. | ☒ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 03.03.2020 | 10.03.2020 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

International application No.

PCT/JP2019/049995

| Patent Documents referred to in the Report | Publication Date | Patent Family | Publication Date |
|---|---|---|---|
| JP 2016-033854 A | 10.03.2016 | (Family: none) | |
| JP 2018-172257 A | 08.11.2018 | WO 2018/181530 A1 entire text CN 110461770 A KR 10-2019-0127756 A | |
| JP 2018-098161 A | 21.06.2018 | (Family: none) | |
| JP 2016-012500 A | 21.01.2016 | (Family: none) | |
| JP 6630865 B1 | 15.01.2020 | (Family: none) | |

Form PCT/ISA/210 (patent family annex) (January 2015)

**EP 3 954 656 A1**

**Patent documents cited in the description**

- JP 2019076525 A
- JP 2015536558 A
- JP 2002201028 A